# EUROPEAN PATENT SPECIFICATION

(11) **EP 4 117 227 B1**
(45) Date of publication and mention of the grant of the patent: **24.12.2025**
(21) Application number: 21780133.1
(22) Date of filing: 10.03.2021
(51) Int. Cl.: H04L 9/32, H04L 9/06, H04L 45/50

(54) **BOUNDARY FILTERING METHOD AND DEVICE FOR SRV6 TRUST DOMAIN**
GRENZENFILTERUNGSVERFAHREN UND -VORRICHTUNG FÜR EINE SRV6-VERTRAUENSDOMÄNE
PROCÉDÉ ET DISPOSITIF DE FILTRAGE DE LIMITE POUR DOMAINE DE CONFIANCE SRV6

(30) Priority: 02.04.2020 CN 202010256371; 24.04.2020 CN 202010333905
(43) Date of publication of application: 11.01.2023
(73) Proprietor: Huawei Technologies Co., Ltd., Shenzhen, Guangdong 518129 (CN)
(72) Inventor: LU, Dongjie, Shenzhen, Guangdong 518129 (CN); XIAO, Yaqun, Shenzhen, Guangdong 518129 (CN); WEN, Huizhi, Shenzhen, Guangdong 518129 (CN); FU, Jianzhong, Shenzhen, Guangdong 518129 (CN)
(74) Representative: Körber, Martin Hans
(86) International application number: PCT/CN2021/079923
(87) International publication number: WO 2021/197003

(56) References cited:
- CN-A- 109 218 189
- US-A1- 2018 109 450
- US-A1- 2020 099 610
- LI Z LI HUAWEI C XIE CHINA TELECOM H TIAN CAICT J MAO HUAWEI C: "Security Considerations for SRv6 Networks; draft-li-spring-srv6-security-consideration-03.txt", no. 3, 4 November 2019 (2019-11-04), pages 1 - 13, XP015136323, Retrieved from the Internet <URL:https://tools.ietf.org/html/draft-li-spring-srv6-security-consideration-03> [retrieved on 20191104]
- LI C LI HUAWEI TECHNOLOGIES C XIE CHINA TELECOM K LEE LG U+ H TIAN F ZHAO CAICT J GUICHARD FUTUREWEI TECHNOLOGIES C LI CHINA TELEC: "Compressed SRv6 Network Programming; draft-li-spring-compressed-srv6-np-02.txt", no. 2, 25 February 2020 (2020-02-25), pages 1 - 24, XP015137894, Retrieved from the Internet <URL:https://tools.ietf.org/html/draft-li-spring-compressed-srv6-np-02> [retrieved on 20200225]
- PIER LUIGI VENTRE ET AL: "Segment Routing: a Comprehensive Survey of Research Activities, Standardization Efforts and Implementation Results", ARXIV.ORG, CORNELL UNIVERSITY LIBRARY, 201 OLIN LIBRARY CORNELL UNIVERSITY ITHACA, NY 14853, 6 April 2019 (2019-04-06), XP081585466
- C. FILSFILS, ED. D. DUKES, ED. CISCO SYSTEMS, INC. S. PREVIDI HUAWEI J. LEDDY INDIVIDUAL S. MATSUSHIMA SOFTBANK D. VOYER BELL CANA: "IPv6 Segment Routing Header (SRH); draft-ietf-6man-segment-routing-header-26.txt", IPV6 SEGMENT ROUTING HEADER (SRH); DRAFT-IETF-6MAN-SEGMENT-ROUTING-HEADER-26.TXT; INTERNET-DRAFT: NETWORK WORKING GROUP, INTERNET ENGINEERING TASK FORCE, IETF; STANDARDWORKINGDRAFT, no. 26, 22 October 2019 (2019-10-22), pages 1 - 32, XP015135684
- C. FILSFILS ET AL.: "Segment Routing Architecture", IETF RFC 8402, 31 July 2018 (2018-07-31), XP055723022, ISSN: 2070-1721
- C. FILSFILS ET AL.: "Segment Routing Policy Architecture", IETF DRAFT-IETF-SPRING-SEGMENT-ROUTING-POLICY-06.TXT, 14 December 2019 (2019-12-14), XP015136984

## Description

### TECHNICAL FIELD

This application relates to the communications field, and in particular, to a packet forwarding method and apparatus.

### BACKGROUND

In the segment routing over internet protocol version 6 (Segment Routing over Internet Protocol Version 6, SRv6) technology, the segment routing (segment routing, SR) technology may be applied to forwarding an internet protocol version 6 (internet protocol version 6, IPv6) packet.

Currently, security risks exist in forwarding a packet by using the SRv6 technology. LI Z LI HUAWEI C XIE CHINA TELECOM H TIAN CAICT J MAO HUAWEI C, " Security Considerations for SRv6 Networks; draft-li-spring-srv6-security-consideration-03.txt", no. 3, (20191104), pages 1 - 13, proposes that integrity verification policy like HMAC processing should be deployed at the external interfaces of the ingress SRv6 routers filtering SRH packets from outside the trusted domain and SRH packets from hosts within the SRv6 domain. LI C LI HUAWEI TECHNOLOGIES C XIE CHINA TELECOM K LEE LG U+ H TIAN F ZHAO CAICT J GUICHARD FUTUREWEI TECHNOLOGIES C LI CHINA TELEC, "Compressed SRv6 Network Programming; draft-li-spring-compressed-srv6-np-02txt", no. 2, (20200225), pages 1 - 24, defines a compressed SRv6 network programming mechanism in order to reduce the overhead of SRv6 by introducing the Compressed Segment Identifier (C-SID) and the Compressed SRH (C-SRH).

### SUMMARY

Embodiments of this application provide a packet forwarding method, to greatly reduce SRv6 trusted domain network resources occupied by an attack packet.

The invention is defined by the appended independent claims. Further embodiments are defined by the appended dependent claims.

According to a first aspect, an embodiment of this application provides a packet forwarding method. The method may be performed by an edge node in an SRv6 trusted domain. When receiving an SRv6 packet from a place outside the trusted domain, the edge node in the trusted domain may verify the SRv6 packet, and forward the SRv6 packet when the SRv6 packet passes the verification. The method includes: The edge node in the trusted domain receives the first packet, where the first packet is an SRv6 packet, and a destination address of the first packet is a binding segment identifier (binding segment ID, BSID). After receiving the first packet, the edge node in the trusted domain may verify the first packet based on the BSID in the first packet and a target field in a segment routing header (segment routing header, SRH) of the first packet, and discard the first packet when the first packet fails the verification. In this embodiment of this application, not only a node outside the trusted domain is required to access the trusted domain by using the BSID, but also the first packet needs to be verified with reference to the target field in the segment routing header. Compared with a solution in which the edge node in the trusted domain performs border filtering on the first packet only by using the BSID, the solution in this embodiment of this application can effectively identify an attack packet, discard, in a timely manner, a large quantity of attack packets that fail the verification, effectively reduce trusted domain network resources occupied by the attack packets, and effectively reduce security risks that are caused by forwarding a packet by using an SRv6 technology.

The SRv6 trusted domain described in this application may also be referred to as an SRv6 security domain.

In an implementation, the edge node may verify, as indicated by a control management device, the first packet based on the BSID and the target field in the SRH of the first packet. Specifically, the edge node may receive a security protection policy from the control management device, where the security protection policy indicates the edge node to verify the first packet based on the BSID and the target field in the SRH.

In an implementation, when an SRv6 packet needs to be forwarded across the trusted domain, the trusted domain may provide a BSID to indicate a forwarding path of the SRv6 packet in the trusted domain. Therefore, a next-hop SID of the BSID theoretically indicates a node outside the trusted domain that directly interacts with the trusted domain. Therefore, the target field may include the next-hop SID of the BSID. The edge node may determine, by using the next-hop SID of the BSID, whether the first packet is forwarded to a valid destination node, or the edge node may determine, by using the BSID, whether the first packet causes an attack to the trusted domain.

In an implementation, a first SID list including the BSID and N SIDs in a SID list may indicate a forwarding path of the first packet from the edge node to the destination node, or the first SID list indicates a forwarding path of the first packet from the edge node to a first node, where the first node is a node between the edge node and the destination node. Therefore, the target field may include the N SIDs in the SID list. In this way, the edge node may verify the first SID list, and forward the first packet only when it is ensured that the path indicated by the first SID list is a valid path, so that a node included on the path indicated by the SID list can avoid a network attack.

In an implementation, when a node outside the trusted domain needs to forward an SRv6 packet to the trusted domain, the trusted domain may provide a BSID to indicate a forwarding path of the SRv6 packet in the trusted domain. In this case, an SRH of the SRv6 packet does not contain a next-hop SID of the BSID. In other words, the BSID is the last SID that indicates the forwarding path of the SRv6 packet. In this case, the value of an SL field in the SRv6 packet is 0. Therefore, the target field may include the segment left SL field, to ensure that the SRv6 packet to be forwarded to the trusted domain can be normally forwarded to the trusted domain.

In an implementation, when the target field includes the next-hop SID of the BSID, in a specific implementation in which the edge node verifies the first packet based on the BSID in the first packet and the target field in the segment routing header SRH, the edge node may determine that the BSID is in the trusted domain, and determine whether the target field is in a valid network segment. A valid destination node of the first packet is located in the valid network segment. If the next-hop SID of the BSID is in the valid network segment, it indicates that a node indicated by the next-hop SID of the BSID is the valid destination node of the first packet. That is, after being forwarded through the path indicated by the BSID, the first packet is forwarded to the valid destination node of the first packet. In this case, it may be considered that the first packet passes the verification. Correspondingly, if the next-hop SID of the BSID is not in the valid network segment, it indicates that after being forwarded through the path indicated by the BSID, the first packet is not forwarded to the valid destination node of the first packet, but is forwarded to another node. In this case, the next-hop SID of the BSID may have been tampered with. Therefore, the first packet may probably to cause an attack to another node. Therefore, if the next-hop SID of the BSID is not in the valid network segment, the first packet fails the verification.

In an implementation, when an SRv6 packet is forwarded, a SID indicating a destination node of the packet may be a SID of a node, or may be a SID of a VPN instance deployed on the node. The SID of the VPN instance is referred to as a VPN SID for short. The SID list of the SRH may include both the SID of the destination node, and the VPN SID of the VPN instance deployed on the destination node. For a node, both a SID of the node and a VPN SID of the node are in a network segment indicated by a locator route of the node. The locator route of the node refers to a network segment route to which the node SID of the node belongs. Therefore, the valid network segment may be indicated by a locator route of the valid destination node. In this way, regardless of whether the next-hop SID of the BSID is the node SID or the VPN SID, whether the first packet is tampered with can be determined by using the valid network segment.

In an implementation, the valid network segment may be included by the control management device in the security protection policy and sent to the edge node.

In an implementation, the valid network segment is statically configured in the edge node.

In an implementation, when the target field includes the next-hop SID of the BSID, to avoid an attack by the first packet to the trusted domain, the edge node may determine, for example, whether the BSID is in the trusted domain. Then, the edge node determines whether the next-hop SID of the BSID is in a first network segment, where a node in the trusted domain belongs to the first network segment. If the next-hop SID of the BSID is in the first network segment, it indicates that a node indicated by the next-hop SID of the BSID is a node in the trusted domain. That is, after being forwarded through the path indicated by the BSID, the first packet does not leave the trusted domain, but continues to be forwarded in the trusted domain. In this case, the next-hop SID of the BSID may have been tampered with. Therefore, the first packet may probably cause a network attack to a node in the trusted domain. Therefore, if the next-hop SID of the BSID is in the first network segment, the first packet fails the verification. Correspondingly, if the next-hop SID of the BSID is not in the first network segment, it indicates that after being forwarded through the path indicated by the BSID, the first packet leaves the trusted domain and is forwarded to another node outside the trusted domain. In this case, it may be considered that the first packet passes the verification.

In an implementation, the first network segment may be included by the control management device in the security protection policy and sent to the edge node.

In an implementation, the first network segment is statically configured in the edge node.

In an implementation, when the target field includes the next-hop SID of the BSID, the edge node may prestore a SID list, and the SID list stored in the edge node indicates a valid path. Specifically, the edge node may prestore one or more SID lists, and one SID list indicates one valid path. The edge node may compare the first SID list with the locally stored SID lists. If the locally stored SID lists include the first SID list, it indicates that a path indicated by the first SID list is a valid path, and therefore the edge node may determine that the first packet passes the verification. On the contrary, if the locally stored SID lists do not include the first SID list, it is determined that the first packet fails the verification.

In an implementation, the SID lists stored in the edge node may be delivered by the control management device to the edge node by using the security protection policy.

In an implementation, the SID lists stored in the edge node may be statically configured in the edge node.

In an implementation, when the target field includes the next-hop SID of the BSID, the edge node may prestore several hash values. The hash values stored in the edge node are obtained by performing a hash operation on SID lists corresponding to valid paths. In this case, the edge node may perform a hash operation on the first SID list to obtain a first hash value. After obtaining the first hash value, the edge node may search the several hash values that are locally stored, to determine whether the locally stored hash values include the first hash value that is calculated. If the locally stored hash values include the first hash value, it indicates that the path indicated by the first SID list is a valid path. Therefore, it may be determined that the first packet passes the verification. On the contrary, if the locally stored hash values do not include the first hash value, it is determined that the first packet fails the verification.

In an implementation, the first packet may include a first field, and the first field may indicate a quantity of to-be-verified SIDs. After receiving the first packet, the edge node may parse the first packet to obtain the value of the first field, so as to further obtain the BSID and the N SIDs in the SRH, and verify the first packet based on the BSID and the N SIDs in the SRH.

In an implementation, when the target field includes the SL field, in a specific implementation in which the edge node verifies the first packet based on the BSID in the first packet and the target field in the segment routing header SRH, the edge node may determine that the BSID is in the trusted domain, and determine whether the value of the target field is 0. When the value of the target field is 0, it indicates that the first packet is a valid packet forwarded from a place outside the trusted domain to the trusted domain. Therefore, it may be determined that the first packet passes the verification. When the value of the target field is not 0, it may be determined that the first packet fails the verification.

In an implementation, the edge node may further receive a second packet. The second packet is similar to the first packet, the second packet is also an SRv6 packet, and a destination address of the second packet is the BSID. After receiving the second packet, the edge node may verify the second packet. Similarly as the edge node verifies the first packet, the edge node may verify the second packet based on the BSID in the second packet and a target field in an SRH of the second packet, and forward the second packet when the second packet passes the verification. During verification of the second packet, not only the BSID is verified, but also the target field is verified. Therefore, the second packet that passes the verification may be considered as a valid packet, and forwarding the second packet across the trusted domain does not bring security risks. The solution provided in this embodiment of this application can reduce security risks that are caused by forwarding a packet by using an SRv6 technology.

According to a second aspect, an embodiment of this application provides a packet forwarding method. The method includes: An edge node in a trusted domain receives a first packet, where the first packet is an SRv6 packet, and a destination address of the first packet is a binding segment identifier BSID; the edge node verifies the first packet based on the BSID in the first packet and a target field in a segment routing header SRH of the first packet; and the edge node forwards the first packet that passes the verification. In this embodiment of this application, not only a node outside the trusted domain is required to access the trusted domain by using the BSID, but also the first packet needs to be verified with reference to the target field in the segment routing header. Compared with a solution of verifying the first packet by using only the BSID, this solution considers more factors in verifying the first packet. That is, a verification standard for allowing an SRv6 packet to be forwarded across the trusted domain is stricter. Therefore, security risks that are caused by forwarding a packet by using an SRv6 technology are reduced.

According to a third aspect, an embodiment of this application provides a forwarding control method. The method includes: A control management device obtains a security protection policy, where the security protection policy indicates an edge node in a trusted domain to verify a received SRv6 packet based on a BSID and a target field in an SRH; and the control management device sends the security protection policy to the edge node in the trusted domain. In this embodiment of this application, the control management device delivers the security protection policy to indicate the edge node in the trusted domain to verify the received SRv6 packet based on the BSID and the target field in the SRH. Compared with a solution of verifying the first packet by using only the BSID, this solution considers more factors in verifying the first packet. That is, a verification standard for allowing an SRv6 packet to be forwarded across the trusted domain is stricter. Therefore, security risks that are caused by forwarding a packet by using an SRv6 technology can be reduced.

In an implementation, the control management device may send the security protection policy to the edge node in the trusted domain by using a path computation element communication protocol PCEP message. For example, a new object is extended in the PCEP message, or a new TLV field is extended in an existing object to carry the security protection policy.

In an implementation, the control management device may send the security protection policy to the edge node in the trusted domain by using a border gateway protocol BGP message. For example, an extended attribute may be added to the BGP message or a new TLV field may be extended in an existing attribute to carry the security protection policy. The existing attribute may be, for example, a border gateway protocol flow specification BGP FS attribute.

In an implementation, the control management device may send the security protection policy to the edge node in the trusted domain by using a network configuration protocol NETCONF packet.

In an implementation, the control management device may send the security protection policy to the edge node in the trusted domain by using a simple network management protocol SNMP packet.

In an implementation, the target field includes a next-hop SID of the BSID; the target field includes N SIDs in a field identifier SID list, where the first SID in the N SIDs is the next-hop SID of the BSID, and N is greater than or equal to 1; or the target field includes a segment left SL field.

In an implementation, when N is greater than 1, the N SIDs are N continuous SIDs in the SID list.

In an implementation, if the target field includes the next-hop SID of the BSID, the security protection policy carries a valid BSID and a valid network segment in the trusted domain.

In an implementation, the valid BSID and the valid network segment in the trusted domain may be carried in an extended attribute of the BGP FS. For example, the valid BSID in the trusted domain is carried in an extended attribute type 17 of the BGP FS, and the valid network segment is carried in an extended attribute type 18 of the BGP FS.

In an implementation, if the target field includes the next-hop SID of the BSID, the security protection policy carries a valid BSID and a first network segment in the trusted domain.

In an implementation, the valid BSID and the first network segment in the trusted domain may be carried in an extended attribute of the BGP FS. For example, the valid BSID in the trusted domain is carried in an extended attribute type 17 of the BGP FS, and the first network segment is carried in an extended attribute type 18 of the BGP FS.

In an implementation, if the target field includes the N SIDs in the segment identifier SID list, the security protection policy carries a SID list that indicates a valid path, and the SID list includes a valid BSID in the trusted domain.

In an implementation, the SID list that indicates a valid path may be carried in an extended attribute of the BGP FS message. For example, the SID list that indicates a valid path may be carried in an extended attribute type 19 of the BGP FS message.

According to a fourth aspect, an embodiment of this application provides an edge node, including a communication interface and a processor connected to the communication interface. The edge node is configured to perform the method according to any one of the first aspect or the implementations of the first aspect, or perform the method according to any one of the second aspect or the implementations of the second aspect by using the communication interface and the processor.

According to a fifth aspect, an embodiment of this application provides a control management device, including a communication interface and a processor connected to the communication interface. The control management device is configured to perform the method according to any one of the third aspect or the possible implementations of the third aspect by using the communication interface and the processor.

According to a sixth aspect, an embodiment of this application provides an edge node. The edge node includes a memory and a processor. The memory is configured to store program code. The processor is configured to run instructions in the program code, to enable the edge node to perform the method according to any one of the first aspect or the possible implementations of the first aspect, or to enable the edge node to perform the method according to any one of the second aspect or the possible implementations of the second aspect.

According to a seventh aspect, an embodiment of this application provides a control management device. The control management device includes a memory and a processor. The memory is configured to store program code. The processor is configured to run instructions in the program code, to enable the control management device to perform the method according to any one of the third aspect or the implementations of the third aspect.

According to an eighth aspect, an embodiment of this application provides a computer-readable storage medium. The computer-readable storage medium stores instructions. When the instructions are run on a computer, the computer is enabled to perform the method according to any one of the first aspect or the possible implementations of the first aspect, the computer is enabled to perform the method according to any one of the second aspect or the possible implementations of the second aspect, or the computer is enabled to perform the method according to any one of the third aspect or the possible implementations of the third aspect.

According to a ninth aspect, an embodiment of this application provides a communication system. The communication system includes an edge node and a control management device. The control management device is configured to perform the method according to any one of the third aspect or the possible implementations of the third aspect.

According to a tenth aspect, an embodiment of this application provides a communication system. The communication system includes an edge node and a control management device. The edge node is configured to perform the method according to any one of the first aspect or the possible implementations of the first aspect, or the edge node is configured to perform the method according to any one of the second aspect or the possible implementations of the second aspect.

### BRIEF DESCRIPTION OF DRAWINGS

To describe the technical solutions in embodiments of this application or in the conventional technology more clearly, the following briefly describes the accompanying drawings used to describe embodiments or the conventional technology. It is clear that the accompanying drawings in the following descriptions show some embodiments of this application, and persons of ordinary skill in the art may still derive other drawings from these accompanying drawings without creative efforts.
FIG. 1 is a schematic structural diagram of an SRv6 packet according to an embodiment of this application;
FIG. 2 is a schematic diagram of a packet forwarding method according to an embodiment of this application;
FIG. 3a is a schematic structural diagram of a network according to an embodiment of this application;
FIG. 3b is a schematic structural diagram of another network according to an embodiment of this application;
FIG. 3c is a schematic structural diagram of another network according to an embodiment of this application;
FIG. 4 is a schematic structural diagram of another SRv6 packet according to an embodiment of this application;
FIG. 5 is a schematic flowchart of a packet forwarding method according to an embodiment of this application;
FIG. 6 is a schematic flowchart of a packet forwarding method according to an embodiment of this application;
FIG. 7 is a schematic flowchart of a packet forwarding method according to an embodiment of this application;
FIG. 8 is a schematic flowchart of a forwarding control method according to an embodiment of this application;
FIG. 9 is a schematic structural diagram of an edge node according to an embodiment of this application;
FIG. 10 is a schematic structural diagram of a control management device according to an embodiment of this application;
FIG. 11 is a schematic structural diagram of an edge node according to an embodiment of this application;
FIG. 12 is a schematic structural diagram of a control management device according to an embodiment of this application;
FIG. 13 is a schematic structural diagram of an edge node according to an embodiment of this application; and
FIG. 14 is a schematic structural diagram of a control management device according to an embodiment of this application.

### DESCRIPTION OF EMBODIMENTS

Embodiments of this application provide a packet forwarding method, to reduce security risks that exist in forwarding a packet by using an SRv6 technology.

For ease of understanding, forwarding a packet by using the SRv6 technology is briefly described first.

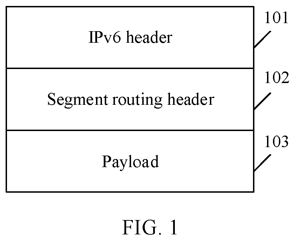

When the SRv6 technology is used to forward a packet, a head node specifies a packet forwarding path, and a transit node guides packet forwarding based on the forwarding path specified by the head node until the packet is forwarded to a destination node. A packet forwarded by using the SRv6 technology may also be referred to as an SRv6 packet. Specifically, refer to FIG. 1 for understanding. FIG. 1 is a schematic structural diagram of an SRv6 packet according to an embodiment of this application. As shown in FIG. 1, the SRv6 packet includes an IPv6 header (IPv6 header) 101, a segment routing header 102, and a payload 103. The segment routing header 102 includes a segment identifier list (segment identifier list, SID list) indicating a packet forwarding path. In an implementation, the SID list may include several node SIDs, for example, include several IPv6 addresses. The node SID indicates a node passed through in a packet forwarding process. In still another implementation, the SID list may include several adjacency link SIDs, and the adjacency link SID indicates an adjacency link through which a packet is forwarded. An adjacency link refers to a direct link between two nodes. In still another implementation, the SID list may further include a node SID and an adjacency link SID.

The IPv6 header 101 includes a destination address (destination address, DA) field (not shown in FIG. 1). The value of the DA field changes during SRv6 packet forwarding. The SRH 102 includes a segment left (segment left, SL) field (not shown in FIG. 1). The SL field indicates the quantity of SIDs that are not processed in the SID list. SL is numbered from 0. When the value of the SL is m, the quantity of unprocessed SIDs in the SID list is (m+1), and segment list[m] is being processed. Processing a SID in the SID list means forwarding a packet to a node indicated by the SID. When the value of SL is equal to m, the destination address in the IPv6 header 101 is segment list[m]. When forwarding an SRv6 packet, the head node and the transit node can determine, based on the value of the SL field and the SID list, a next-hop destination node for packet forwarding. Specifically, after a transit node receives an SRv6 packet, if a destination address in the SRv6 packet is an address of the transit node, the transit node may subtract 1 from the value of an SL field, determine, by using the value of the SL field that is obtained by subtracting 1 as an index, a next-hop destination node to which the packet is forwarded, and after determining the next-hop destination node to which the packet is forwarded, modify the value of a destination address field to an IPv6 address of the determined next-hop destination node.

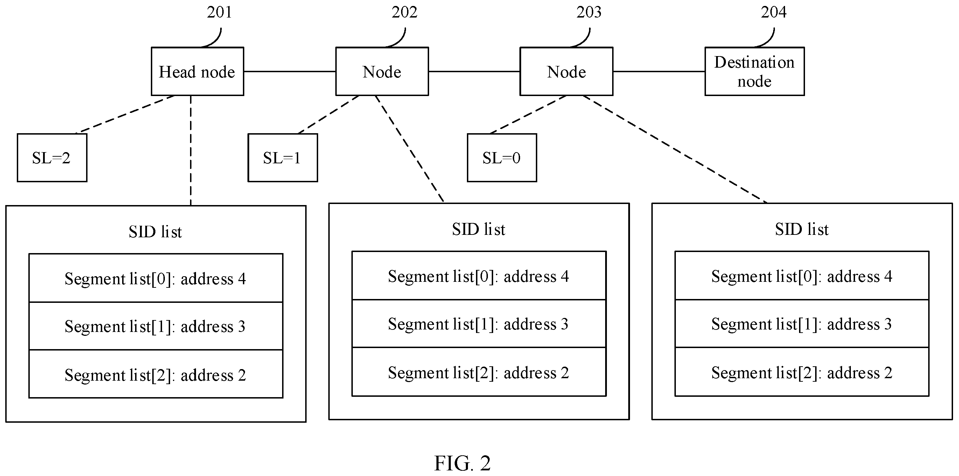

With reference to FIG. 2, the following describes a specific manner in which the head node and the transit nodes forward a packet by using the SRv6 technology. FIG. 2 is a schematic diagram of a packet forwarding method according to an embodiment of this application. As shown in FIG. 2, a head node 201 determines that a packet passes through a node 202 and a node 203 in sequence and is forwarded to a destination node 204. An SRH of an SRv6 packet obtained by the head node 201 carries a SID list. The SID list includes three IPv6 addresses: an address 2 carried in segment list[2], an address 3 carried in segment list[1], and an address 4 carried in segment list[0]. The address 2 is an address of the node 202, the address 3 is an address of the node 203, and the address 4 is an address of the node 204. After obtaining the SRv6 packet, the head node 201 modifies a destination address of the SRv6 packet to the address 2, and modifies the value of an SL field to 2. Then, the node 201 forwards the modified SRv6 packet to the node 202. The SRv6 packet received by the node 202 includes the SID list, and the value of the SL field is equal to 2. After receiving the SRv6 packet, the node 202 determines that the destination address is the address of the node 202. Therefore, the node 202 subtracts 1 from the value of the SL field to obtain 1, determines, by using 1 as an index, that a next-hop destination node for packet forwarding is the node 203 indicated by the address 3 carried in segment list[1], and modifies the destination address of the SRv6 packet to the address 3. Then, the node 202 forwards the SRv6 packet to the node 203. By analogy, the SRv6 packet received by the node 203 includes the SID list, and the value of the SL field is equal to 1. After receiving the SRv6 packet, the node 203 determines that the destination address is the address of the node 203. Therefore, the node 203 subtracts 1 from the value of the SL field to obtain 0, determines, by using 0 as an index, that a next-hop destination node for packet forwarding is the node 204 indicated by the address 3 carried in segment list[0], modifies the destination address of the SRv6 packet to the address 4, and forwards the SRv6 packet to the node 204, to complete packet forwarding.

The node 201, the node 202, the node 203, and the node 204 are all nodes that support an SRv6 technology. In a process in which the node 201 forwards the SRv6 packet to the node 202, the SRv6 packet may pass through several other nodes, which are not shown in FIG. 2. In addition, FIG. 2 is described by using an example in which the SRH 102 carries a node SID. However, the SRH 102 carries an adjacency link SID, or the SRH 102 carries a node SID and an adjacency link SID. A specific packet forwarding manner is the same as a forwarding manner of the node SID carried in the SRH 102, and details are not described herein again.

In some embodiments, in consideration that the length of an Ethernet packet needs to be within a proper range, if the SID list occupies a relatively large amount of data, the data amount of the payload 103 is affected. A larger amount of data occupied by the SID list affects the network performance of the entire network more. Therefore, the SID list in the SRv6 packet obtained by the node 201 may not include the address 2, so that the amount of data occupied by the SID list is reduced. In this scenario, the value of the SL field in the SRv6 packet obtained by node 201 is still 2. During SRv6 packet forwarding, if the SID list does not include the address 2, such an SRv6 packet forwarding mode may also be referred to as a Reduce mode. Correspondingly, if the SID list includes the address 2, such an SRv6 packet forwarding mode may also be referred to as a common mode.

It can be learned from the foregoing descriptions that when a packet is forwarded by using the SRv6 technology, a transit node forwards the packet based on a SID list, but does not verify the SID list. In this case, a network hacker may maliciously tamper with the SID list to perform a network attack, affecting network security.

Currently, an SRv6 trusted domain may be defined to avoid the network attack. The trusted domain indicates a network range of avoiding the network attack. The trusted domain may be determined in a plurality of manners, for example, may be determined based on a network scenario. For example, a core network part in a network is specified as the trusted domain. Alternatively, the trusted domain may be determined based on a service type. For example, a network range of transmitting a specific service packet is determined as the trusted domain. Specifically, to ensure that the trusted domain is not attacked, an access control list (access control list, ACL) traffic filtering policy may be configured in an edge node or a transit node in the trusted domain. For example, the edge node in the trusted domain verifies a received SRv6 packet. If a destination address of the SRv6 packet is an address of a node in the trusted domain, the edge node discards the SRv6 packet. For another example, the transit node in the trusted domain verifies a received SRv6 packet. If a source address of the SRv6 packet is an address of a node outside the trusted domain, the transit node discards the SRv6 packet. In this way, SRv6 packets outside the trusted domain cannot be transmitted to the trusted domain. SRv6 packets generated only in the trusted domain are forwarded, and the trusted domain is prevented from being attacked. The edge node in the trusted domain is a node that directly communicates with a node outside the trusted domain. The transit node in the trusted domain is a node other than the edge node.

In some embodiments, the SRv6 packet needs to be forwarded across the trusted domain. For example, an SRv6 packet outside the trusted domain needs to be forwarded to the trusted domain, or an SRv6 packet generated in a first domain needs to be forwarded to a second domain through the trusted domain, where the first domain and the second domain are different from the trusted domain. In this case, how to ensure the network security is an urgent problem to be resolved currently.

The inventor of this application finds that, to ensure the security of the trusted domain, prevent leakage of a network topology of the trusted domain, and reduce a possibility that the trusted domain is attacked, when an SRv6 packet needs to be forwarded across the trusted domain, the SRv6 packet can access the trusted domain by using a BSID. The BSID may identify a forwarding path.

Specifically, in an example, a control management device may generate a BSID that identifies a forwarding path in the trusted domain. Correspondingly, when computing the forwarding path of the SRv6 packet, the control management device may obtain a SID list including the BSID. In addition, after generating the BSID, the control management device may send a correspondence between the BSID and the forwarding path indicated by the BSID to the edge node in the trusted domain, so that the edge node in the trusted domain checks the SRv6 packet, and forwards the packet in the trusted domain if the SRv6 packet passes the verification. In another example, the edge node in the trusted domain may generate a B SID, and send a correspondence between the BSID and a forwarding path indicated by the BSID to the control management device, so that when computing a forwarding path of the SRv6 packet, the control management device obtains a SID list including the BSID. The control management device mentioned in embodiments of this application may be, for example, a device on which network management software is run, or may be, for example, a controller. This is not specifically limited in this embodiment of this application.

For the correspondence between the BSID and the forwarding path indicated by the BSID, an example is used herein for description: A BSID 1 indicates a forwarding path 1 in the trusted domain, and the correspondence may be, for example, a correspondence between the BSID 1 and a SID list that indicates the forwarding path 1. This may be understood with reference to the following Table 1.

**Table 1**

| BSID | SID list indicating a forwarding path |
|---|---|
| BSID 1 | SID 1 (indicating a node 1) |
| | SID 2 (indicating a node 2) |
| | **SID** 3 **(indicating** a node 3) |

As shown in Table 1, the forwarding path indicated by the BSID 1 is a path that passes through the node 1, the node 2, and the node 3 in sequence. Table 1 is shown only for ease of understanding, and does not constitute a limitation on this embodiment of this application.

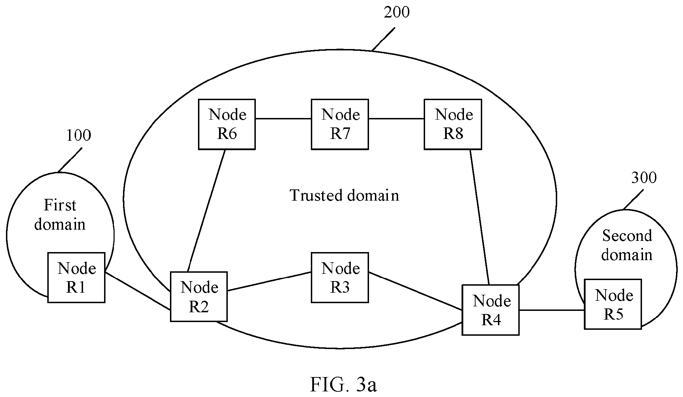

With reference to FIG. 3a, the following describes specific implementations in which the edge node in the trusted domain verifies the SRv6 packet based on the BSID, and the edge node in the trusted domain forwards, in the trusted domain, the SRv6 packet that passes the verification.

FIG. 3a is a schematic structural diagram of a network according to an embodiment of this application. As shown in FIG. 3a, a node R1 is a node in a first domain 100, a node R2 and a node R4 are edge nodes in a trusted domain 200, and a node R5 is a node in a second domain 300. The node R2 may directly communicate with the node R1, and the node R4 may directly communicate with the node R5. A node R6, a node R7, and a node R8 are all nodes in the trusted domain 200. In some embodiments, the first domain 100 and the second domain 300 may also be defined as trusted domains.

In this embodiment of this application, the trusted domain 200 may belong to an access network, a bearer network, a core network, an operator network, or a campus network. This is not specifically limited in this embodiment of this application. In an example, the trusted domain 200 may belong to the operator network, the node R2 is deployed in a customer equipment room as a cell site gateway (cell site gateway, CSG) device, the first domain 100 belongs to an enterprise network, and the node R1 is a customer premise equipment (customer premise equipment, CPE) device.

In the scenario shown in FIG. 3a, the head node R1 obtains an SRv6 packet including a BSID. When forwarding the SRv6 packet, the node R1 modifies a destination address of the SRv6 packet to the BSID, and forwards the modified packet to the node R2 in the trusted domain 200. After receiving the SRv6 packet, the node R2 verifies the SRv6 packet by using the destination address of the SRv6 packet, and if the destination address is a valid BSID in the trusted domain 200, determines that the SRv6 packet passes the verification. Specifically, assuming that the destination address in the SRv6 packet is an address A, the node R2 may, for example, search a locally stored BSID list for the address A. If the address A exists, it indicates that the address A is a valid BSID in the trusted domain. In this case, the node R2 forwards the SRv6 packet in the trusted domain. The BSID list locally stored in the node R2 includes valid BSIDs in the trusted domain.

When forwarding the SRv6 packet, the node R2 may re-encapsulate the SRv6 packet, convert the BSID into a SID list that indicates a forwarding path, and encapsulate the SID list into the SID list of the SRH in the SRv6 packet. In this way, the SRv6 packet is forwarded in the trusted domain.

In this embodiment of this application, the node R2 may re-encapsulate the SRv6 packet in a plurality of encapsulation manners. A specific encapsulation manner is related to a forwarding manner of the SRv6 packet. The following describes two possible implementations for the node R2 to re-encapsulate the SRv6 packet.

In an implementation, if the SRv6 packet is forwarded based on a tunnel, when re-encapsulating the SRv6 packet, the node R2 may add an IPv6 header and an SRH to an original IPv6 header and an original SRH. The original IPv6 header and a destination address field and an SL field in the original SRH are updated by using a technology the same as the conventional technology. A source address in the added IPv6 header is an address of the node R2, and a destination address is a next-hop SID in the SID list corresponding to the BSID.

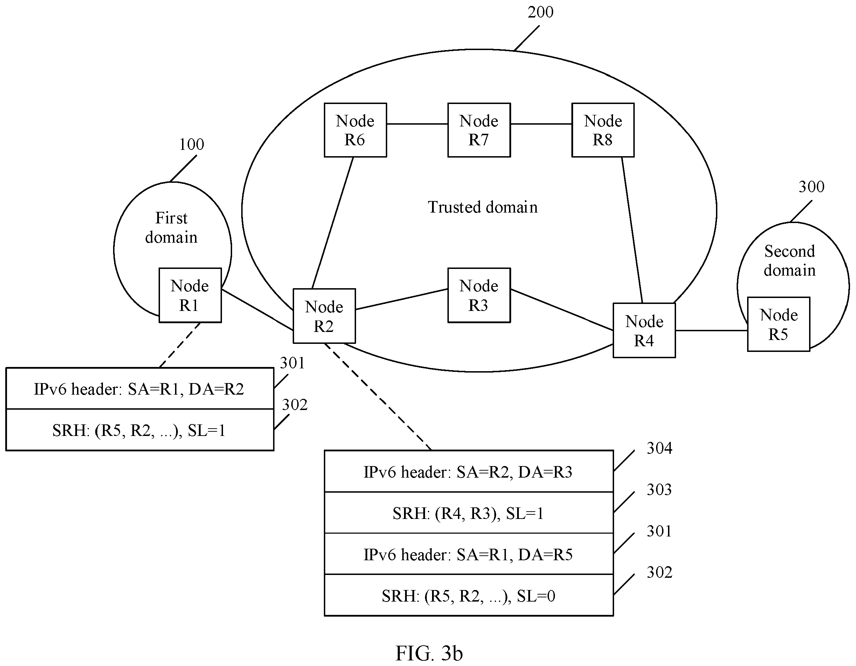

Refer to FIG. 3b for understanding. FIG. 3b is a schematic structural diagram of another network according to an embodiment of this application. As shown in FIG. 3b, in an SRv6 packet obtained by the node R1, a source address carried in an IPv6 header 301 is the address of the node R1, and a destination address is the address of the node R2. A SID list field in an SRH 302 includes (R5, R2, ...). R2 is a BSID in a trusted domain, and a path indicated by the BSID is a forwarding path that passes through the node R2, the node R3, and the node R4 in sequence. An ellipsis in the SID list field is valid when the SRv6 packet is received by the node R1 from another node, and indicates a forwarding path of the SRv6 packet before the node R1. R5 in the SID list field is a SID of the node R5. When the node R1 obtains the SRv6 packet, the value of an SL field is 2. After modifying the value of the SL field to 1, the node R1 sends the SRv6 packet to the node R2. After receiving the SRv6 packet, the node R2 locally searches for the SID list corresponding to the BSID. The SID list that is found is (R3, R4). R3 in the SID list is a SID of the node R3, and R4 in the SID list is a SID of the node R4. The node R2 encapsulates the SID list that is found into an added SRH 303. As shown in FIG. 3b, the value of an SL field in the SRH 303 is equal to 1, and the node R2 determines, based on the value of the SL field, that a destination address is R3. Therefore, the node R2 modifies a destination address in an added IPv6 header 304 to R3, and modifies a source address in the packet header 304 to R2. In the original IPv6 header 301, the source address is R1, and the destination address is R5. The value of the SL field in the original SRH 302 is 0. When the SRv6 packet is forwarded in the trusted domain 200, the content of the source address field and the destination address field in the IPv6 header 301 remains unchanged, and the value of the SL field in the SRH 302 also remains unchanged. After the SRv6 packet is forwarded to the R4 node, the R4 node removes the IPv6 header 304 from the SRH 303, and the R4 node continues to forward the SRv6 packet based on the SRH 302.

In another implementation, if the SRv6 packet is not forwarded based on a tunnel, when re-encapsulating the SRv6 packet, the node R2 directly includes the SID list corresponding to the BSID in the original SRH.

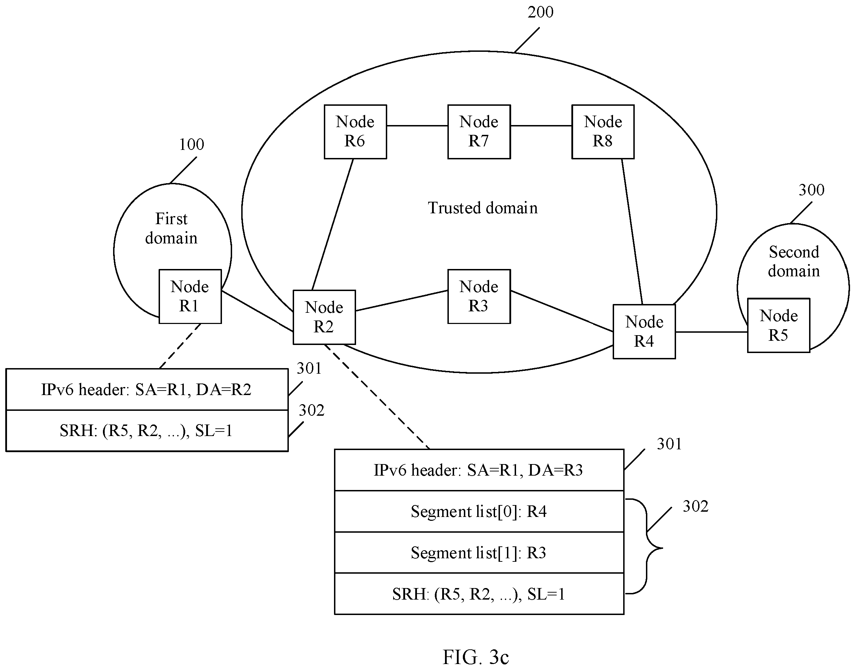

Refer to FIG. 3c for understanding. FIG. 3c is a schematic structural diagram of another network according to an embodiment of this application. For a same part in FIG. 3c and FIG. 3b, refer to the foregoing descriptions of FIG. 3b. Details are not described herein again. As shown in FIG. 3c, the node R2 directly includes the SID list (R3, R4) corresponding to the BSID to the SRH 302. In the IPv6 header 301, the source address is R1, and the destination address is R3. After the SRv6 packet is forwarded to the node R4, R4 continues to forward the SRv6 packet to the node R5.

The foregoing manner in which the head node accesses the trusted domain by using the BSID can ensure, to some extent, that the network topology of the trusted domain is not disclosed. However, the edge node in the trusted domain verifies only the BSID and does not verify other SIDs in the SID list. In this case, if the other SIDs in the SID list are tampered with, the network may still be attacked. For example, refer to FIG. 3a for understanding. It is assumed that a valid destination node of the SRv6 packet is the node R5. If a SID, in the SID list in the SRv6 packet, that indicates the node R5 is tampered with into a SID of another node in the trusted domain 200, the security of the trusted domain 200 is affected. If a SID, in the SID list in the SRv6 packet, that indicates the node R5 is tampered with into a SID of another node in the second domain 300, the security of the second domain 300 is affected.

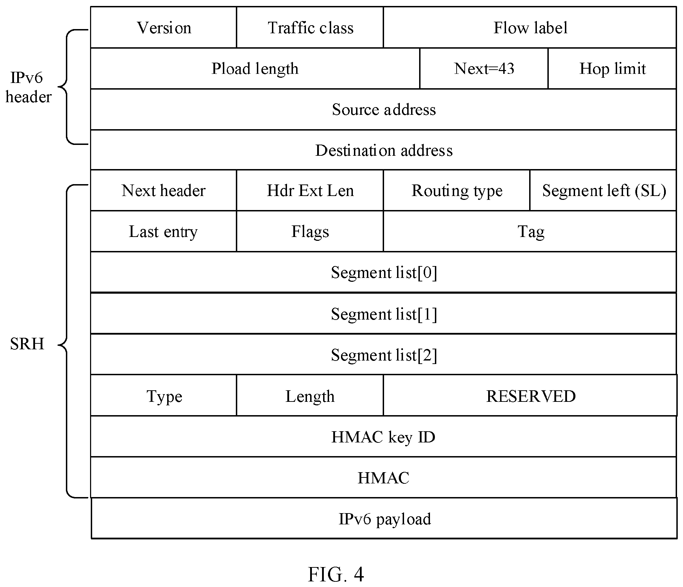

The inventor of this application finds that, in still another implementation, a key-related hash-based message authentication code (hashed-based message authentication code, HMAC) check may be configured in the edge node in the trusted domain, to prevent the SRH from being tampered with. An HMAC operation may use a key and data as inputs, and compress the data into a data digest of a fixed length. Specifically, refer to FIG. 4 for understanding. FIG. 4 is a schematic structural diagram of an SRv6 packet according to an embodiment of this application. As shown in FIG. 4, a segment routing header SRH includes an HMAC key ID field and an HMAC field. The HMAC key ID field identifies a key and a hash algorithm used in an HMAC check, and includes four bytes. The HMAC field indicates a data digest of a specific field in an SRv6 packet, and includes 32 bytes. The specific field includes, for example, a source address (source address, SA) field, a last entry (English: last entry) field, a flags (English: flags) field, a SID list field, and an HMAC key ID field that are shown in FIG. 4. Fields of the SRv6 packet shown in FIG. 4 are not described in detail herein.

In the SRv6 packet shown in FIG. 4, the SA field includes 16 bytes, the last entry field includes one byte, a flags field includes one byte, and the SID list field includes three field identifiers: segment list[2], segment list[1], and segment list[0], which occupy a total of 48 bytes. The value of the HMAC field is a data digest obtained by calculating, by using the key and the hash algorithm indicated by the HMAC key ID, 70-byte data including the specific field. The total quantity of bytes of the specific field may be determined based on the quantity of SIDs included in the SID list field. Descriptions are provided herein only with reference to FIG. 4, and the total quantity of bytes of the specific field is not limited to 70 bytes.

In a specific implementation, when the HMAC check is used to prevent the SRH from being tampered with, a head node outside a trusted domain may store a key and a hash algorithm. When generating an SRv6 packet, the node outside the trusted domain may calculate an HMAC by using the key, the hash algorithm, and the specific field, to obtain an SRv6 packet having a structure shown in FIG. 4, and forward the SRv6 packet to an edge node in the trusted domain. The key and the hash algorithm may be prestored in the edge node in the trusted domain. After receiving the SRv6 packet, the edge node in the trusted domain parses the HMAC key ID field, and searches for, by using the HMAC key ID as an index, the key and the hash algorithm used for the HMAC check. Then, the edge node in the trusted domain calculates the specific field in the received SRv6 packet based on the key and the hash algorithm that are found, to obtain a data digest. The edge node compares the calculated data digest with the value of the HMAC field in the SRv6 packet. If the two are the same, it indicates that the SRv6 packet is not tampered with, and the edge node may continue to forward the packet. If the two are different, it indicates that the SRv6 packet has been tampered with, and the edge node may discard the packet. It should be noted that, in this case, the head node outside the trusted domain may be considered as a trusted node. If the head node that has the key and the hash algorithm actively tampers with the packet, the security of the entire network cannot be ensured.

In some embodiments, to avoid a threat to the security of the entire network caused when the head node that has the key and the hash algorithm is attacked, alternatively, a control management device may calculate the HMAC and deliver the HMAC to the head node. This is not specifically limited in this embodiment of this application.

The foregoing manner can ensure that the SRv6 packet is not tampered with, but the key and the hash algorithm need to be prestored in the edge node in the trusted domain. Because the security of the key and the hash algorithm is particularly important to the reliability of a verification result, additional protection measures are required to protect the security of the key and the hash algorithm. Generally, the edge device in the trusted domain is a small forwarding device, and has a limited data processing capability. Protection of the security of the key and the hash algorithm consumes a relatively large quantity of computing resources of the edge device. In this case, if the foregoing manner is used to verify whether the SRv6 packet is tampered with, the performance of the edge device in the trusted domain is affected. As a result, the foregoing manner may not probably be used.

Therefore, how to minimize the security risks that exist in forwarding a packet by using an SRv6 technology while ensuring the performance of the edge node in the trusted domain is an urgent problem to be resolved currently.

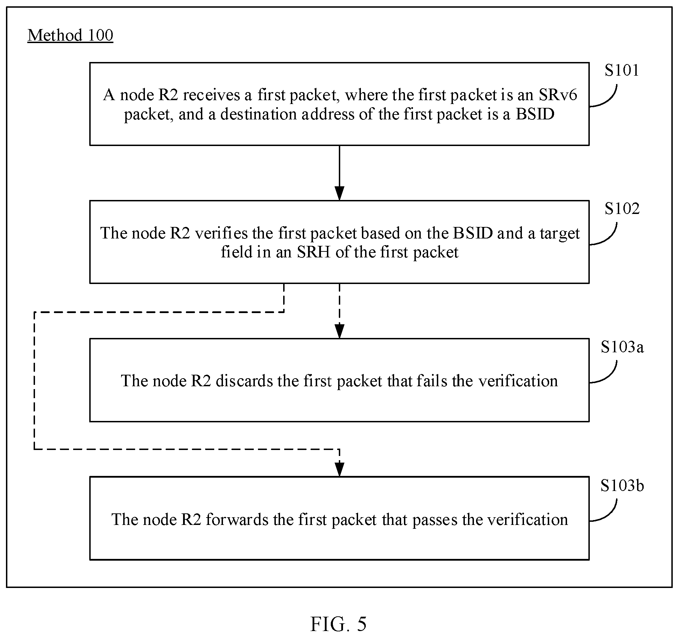

To resolve this problem, embodiments of this application provide a packet forwarding method. The following describes, with reference to the network architecture shown in FIG. 3a, the packet forwarding method provided in embodiments of this application. FIG. 5 is a schematic flowchart of the packet forwarding method according to an embodiment of this application. The method 100 shown in FIG. 5 may be implemented, for example, by using S101, S102, and S103a, or by using S101, S102, and S103b.

S101: The node R2 receives a first packet, where the first packet is an SRv6 packet, and a destination address of the first packet is a BSID.

For the node R2, refer to the foregoing descriptions of FIG. 3a. Details are not described herein again. For the SRv6 packet and the destination address of the SRv6 packet, refer to the foregoing descriptions of the SRv6 packet and the SRv6 packet forwarding process. Details are not described herein again.

In this embodiment of this application, the first packet is sent by a node outside a trusted domain to the node R2, and the node outside the trusted domain may be, for example, the node R1 shown in FIG. 3a.

In this embodiment of this application, to ensure the network topology security of the trusted domain, the node outside the trusted domain can access the trusted domain only by using a valid BSID in the trusted domain.

S102: The node R2 verifies the first packet based on the BSID and a target field in an SRH of the first packet.

After the node R2 receives the first packet, to avoid a network attack, the node R2 may verify the first packet to determine whether the first packet is an attack packet. Specifically, when the first packet passes the verification, it indicates that the first packet is not an attack packet. Therefore, the node R2 may perform the step of forwarding the first packet in S103a, that is, allowing forwarding of the first packet across the trusted domain. When the first packet fails the verification, it indicates that the first packet may be an attack packet. In this case, if the first packet is forwarded across the trusted domain, a network attack may be caused to the trusted domain or another network (for example, the second domain 300 shown in FIG. 3a). Therefore, the node R2 may perform the step of discarding the first packet in S103b.

In this embodiment of this application, in one aspect, a node outside the trusted domain can access the trusted domain only by using a valid BSID in the trusted domain. Therefore, whether the first packet is an attack packet may be determined based on whether the destination address of the first packet is the valid BSID in the trusted domain. In another aspect, in consideration that the SRH of the SRv6 packet includes key information for guiding packet forwarding, for example, a SID list, whether the first packet is an attack packet may be determined by verifying the key information. Therefore, the node R2 may verify the first packet based on the BSID in the first packet and the target field in the SRH of the first packet.

In an implementation of this embodiment of this application, the node R2 may perform S102 as indicated by a control management device. Specifically, the control management device may send a security protection policy to the node R2, where the security protection policy carries indication information, and the indication information indicates the node R2 to verify the received SRv6 packet. Specifically, the indication information indicates the node R2 to verify the SRv6 packet based on the BSID in the received SRv6 packet and the target field in the SRH. Specifically, the control management device may send the security protection policy to the node R2 by using a network configuration protocol (Network Configuration Protocol, NETCONF), a simple network management protocol (Simple Network Management Protocol, SNMP), a path computation element communication protocol (Path Computation Element Communication Protocol, PCEP), a border gateway protocol (Border Gateway Protocol, BGP), or the like. In a specific implementation, the security protection policy may be sent by using a border gateway protocol flow specification (Border Gateway Protocol Flow Specification, BGP FS) route.

The following describes the BGP FS route.

The BGP FS route includes new BGP network layer reachability information and a new extended community attribute. By using the new network layer reachability information and the new extended community attribute, the BGP FS route may carry a corresponding BGP FS rule, and the BGP FS rule may also be considered as a traffic control policy. Specifically, the BGP FS rule may include a traffic matching condition and a corresponding traffic processing action after traffic matching. Currently, the traffic matching condition is carried in the BGP FS route as network layer reachability information, and the traffic processing action is carried in the BGP FS route as the extended community attribute. Currently, 16 types of traffic matching conditions (type 1 to type 16) have been defined in the BGP FS. The 16 types of traffic matching conditions are not detailed here. A specific implementation of S 102 may be determined based on the target field. A specific implementation of S102 varies with the target field. The following describes specific content of the target field and a specific implementation of S102 corresponding to the target field.

Implementation 1: The target field is a next-hop SID of the BSID.

In this embodiment of this application, generally, when an SRv6 packet needs to be forwarded across the trusted domain, the trusted domain may provide a BSID to indicate a forwarding path of the SRv6 packet in the trusted domain. In other words, the next-hop SID of the BSID theoretically indicates a node outside the trusted domain that directly interacts with the trusted domain. Refer to FIG. 3b for understanding. The next-hop SID of the BSID indicates the node R5 in the second domain 300.

In some embodiments, if the first packet is a valid packet that is not tampered with, the next-hop SID of the BSID may indicate a valid destination node of the first packet. To ensure that the first packet can be accurately forwarded to the valid destination node and avoid causing a network attack to another node, in a specific implementation of S102, for example, the node R2 may determine whether the BSID is in the trusted domain. Then, the node R2 determines whether the next-hop SID of the BSID is in a valid network segment, where the valid destination node of the first packet is located in the valid network segment. If the next-hop SID of the BSID is in the valid network segment, it indicates that a node indicated by the next-hop SID of the BSID is the valid destination node of the first packet. That is, after being forwarded through the path indicated by the BSID, the first packet is forwarded to the valid destination node of the first packet. In this case, it may be considered that the first packet passes the verification. Correspondingly, if the next-hop SID of the BSID is not in the valid network segment, it indicates that after being forwarded through the path indicated by the BSID, the first packet is not forwarded to the valid destination node of the first packet, but is forwarded to another node. In this case, the next-hop SID of the BSID may have been tampered with. Therefore, the first packet may probably to cause an attack to another node. Therefore, in this embodiment of this application, if the next-hop SID of the BSID is not in the valid network segment, the first packet fails the verification.

In this embodiment of this application, for example, the valid network segment may be statically configured in the node R2, or may be sent by the control management device to the node R2. This is not specifically limited in this embodiment of this application. If the valid network segment is sent by the control management device to the node R2, for example, when sending the security protection policy to the node R2, the control management device may include the valid network segment in the security protection policy and send the security protection policy to the node R2. In this way, compared with a solution in which the control management device separately sends the security protection policy and the first network segment to the node R2, this solution can reduce a quantity of interactions between the control management device and the node R2, and save input-output (input-output, IO) resources of the control management device and the node R2.

As described above, the control management device may include the security protection policy in the BGP FS route and send the BGP FS route to the node R2. In addition, 16 types of traffic matching conditions have been defined in the BGP FS route. Therefore, in this embodiment of this application, the BGP FS message may be extended. For example, a traffic matching condition type 17 and a traffic matching condition type 18 are added, the added traffic matching condition type 17 may carry the BSID, and the added traffic matching condition type 18 may carry the valid network segment.

In some embodiments, in consideration that nodes included in the valid network segment may not be limited to the valid destination node of the first packet, to prevent a network hacker from tampering with the first packet to cause a network attack to another node in the valid network segment, in an implementation of this embodiment of this application, a mask of the valid network segment may be set as long as possible. In an example, the type 18 may further carry a mask length of the valid network segment. Certainly, the type 18 may further carry other information, which is not described one by one herein.

For a specific implementation in which the node R2 determines whether the BSID is in the trusted domain, refer to the related descriptions of FIG. 3a above. Details are not described herein again.

The foregoing valid network segment is not specifically limited in this embodiment of this application. In an actual application, when an SRv6 packet is forwarded, a SID indicating a destination node of the packet may be a node SID, or may be a SID of a virtual private network (virtual private network, VPN) instance deployed on the node. The SID of the VPN instance is referred to as a VPN SID for short. Certainly, the SID list of the SRH may include both the SID of the destination node, and the VPN SID of the VPN instance deployed on the destination node. For a node, both a SID of the node and a VPN SID of the node are in a network segment indicated by a locator route of the node. The locator route of the node refers to a network segment route to which the node SID of the node belongs. Therefore, in an embodiment, the valid network segment may be indicated by a locator route of the valid destination node. In this way, regardless of whether the next-hop SID of the BSID is the node SID or the VPN SID, whether the first packet is tampered with can be determined by using the valid network segment.

The following briefly describes the type 17 and the type 18 by using examples. It should be understood that a related solution in which the control management device delivers the security protection policy is merely described as an example, and this embodiment of this application is not limited thereto.

The type 17 includes two fields: type and BSID, that is, <type, BSID>. The BSID field carries a valid BSID in the trusted domain, and the type field has a fixed value of 17.

The type 18 field carries a type field, an operator field, and a value field, that is, <type, [operator, value]+>.

The type field has a value of 18.

The value field carries a valid network segment. The value field includes a network prefix and a mask length. The network prefix includes one byte, and the mask length includes 16 bytes.

The operator field includes eight bits, which are respectively a bit 0 to a bit 7.

The plus sign "+" indicates that a plurality of combinations of [operator, value] can be included.

The meaning of each bit in the operator field is shown in the following Table 2:

**Table 2**

| Bit 0 | Bit 1 | Bit 2 | Bit 3 | Bit 4 | Bit 5 | Bit 6 | Bit 7 |
|---|---|---|---|---|---|---|---|
| e | a | Reserve | Reserve | Reserve | Reserve | Miss | Match |

| | | | | | | | |
|---|---|---|---|---|---|---|---|
| E: An end-of-list bit. The value of E is 1, indicating that the current <operator, value> is the last combination of <operator, value>. A: An "and" bit. If the value of a is 1, it indicates that the current field of <operator, value> has an "OR" relationship with the previous field of <operator, value>. If the value of a is 0, it indicates that the current field of <operator, value> has an "AND" relationship with the previous field of <operator, value>. Reserve: A "reserve" field. Miss: Indicating a processing action taken when a next hop of the BSID is not in a network segment indicated by the value. If the value of Miss is 0, the packet is to be forwarded. If the value of Miss is 1, the packet is to be discarded. Match: Indicating a processing action taken when a next hop of the BSID is in a network segment indicated by the value. If the value of Match is 0, the packet is to be forwarded. If the value of Match is 1, the packet is to be discarded. | | | | | | | |

For a security protection policy carrying a BSID and a valid network segment, an example is described herein: For a service, a BSID b::1 is provided for a node outside a trusted domain, to provide guidance about a forwarding path in the trusted domain. A valid destination node of a service packet corresponding to the service is in a network segment of c::1/64. For a edge node in the trusted domain, the BGP FS route is used to deliver the security protection policy. Specifically, the following security protection policy includes: <0x11, b::1> and <0x12, [0x82, c::1/64]>.

0x11 indicates the type 17. b::1 indicates the node R2 to verify whether a destination address of a received packet 1 is the valid BSID b::1. 0x12 indicates the type 18. [0x82, c::1/64] indicates the node R2 to forward the packet 1 when the next-hop SID of the BSID is in the network segment indicated by c::1/64, or otherwise, discard the packet 1.

In some embodiments, to prevent the first packet from attacking the trusted domain, in a specific implementation of S102, for example, the node R2 may determine whether the BSID is in the trusted domain. Then, the node R2 determines whether the next-hop SID of the BSID is in a first network segment, where a node in the trusted domain belongs to the first network segment. If the next-hop SID of the BSID is in the first network segment, it indicates that a node indicated by the next-hop SID of the BSID is a node in the trusted domain. That is, after being forwarded through the path indicated by the BSID, the first packet does not leave the trusted domain, but continues to be forwarded in the trusted domain. In this case, the next-hop SID of the BSID may have been tampered with. Therefore, the first packet may probably cause a network attack to a node in the trusted domain. Therefore, in this embodiment of this application, if the next-hop SID of the BSID is in the first network segment, the first packet fails the verification. Correspondingly, if the next-hop SID of the BSID is not in the first network segment, it indicates that after being forwarded through the path indicated by the BSID, the first packet leaves the trusted domain and is forwarded to another node outside the trusted domain. In this case, it may be considered that the first packet passes the verification.

In this embodiment of this application, for example, the first network segment may be statically configured in the node R2, or may be sent by the control management device to the node R2. This is not specifically limited in this embodiment of this application. If the first network segment is sent by the control management device to the node R2, for example, when sending the security protection policy to the node R2, the control management device may include the first network segment in the security protection policy and send the security protection policy to the node R2. In this way, compared with a solution in which the control management device separately sends the security protection policy and the first network segment to the node R2, this solution can reduce a quantity of interactions between the control management device and the node R2, and save input-output IO resources of the control management device and the node R2.

As described above, the control management device may include the security protection policy in the BGP FS route and send the BGP FS route to the node R2. In addition, 16 types of traffic matching conditions have been defined in the BGP FS route. Therefore, in this embodiment of this application, the BGP FS route may be extended, a traffic matching condition type 17 and a traffic matching condition type 18 are added, the added traffic matching condition type 17 may carry the BSID, and the added traffic matching condition type 18 carries the first network segment. Certainly, the type 18 may further carry other information, for example, a mask length of the first network segment, which is not described one by one herein.

For the type 17 and the type 18, refer to the foregoing related descriptions. Details are not described herein again.

For a security protection policy carrying a BSID and a first network segment, an example is described herein: An address range in the trusted domain 200 corresponds to a network segment of a:: 1/64. For a service, a BSID b::1 is provided for a node outside a trusted domain, to provide guidance about a forwarding path in the trusted domain. For a edge node in the trusted domain, the BGP FS route is used to deliver the security protection policy. Specifically, the following security protection policy includes: <0x11, b::1> and <0x12, [0x81, a::1/64]>.

0x11 indicates the type 17. b::1 indicates the node R2 to verify whether a destination address of a received packet 1 is the valid BSID b::1. 0x11 indicates the type 18. [0x81, a::1/64] indicates the node R2 to forward the packet 1 when the next-hop SID of the BSID is not in the network segment indicated by a::1/64, or otherwise, discard the packet 1.

For a specific implementation in which the node R2, for example, may determine whether the BSID is in the trusted domain, refer to the related descriptions of FIG. 3a above. Details are not described herein again.

It can be learned from the foregoing descriptions that, in implementation 1, after the SRv6 packet accesses the trusted domain by using the BSID, it can be ensured that the trusted domain is not attacked, or the first packet can be forwarded to the valid destination node, so as to prevent a node other than the valid destination node from being attacked. In addition, because the protection of the key and the hash algorithm is not involved, computing resources of the node R2 can be saved. Therefore, according to the solution in this embodiment of this application, the security risks that exist in forwarding a packet by using the SRv6 technology can be reduced as much as possible, on the premise of ensuring the performance of the node R2.

Implementation 2: The target field is the N SIDs in the SID list of the SRH of the first packet.

In this embodiment of this application, the value of N is greater than or equal to 1. When N is equal to 1, the SID is the next-hop SID of the BSID. When the value of N is greater than 1, the N SIDs are N continuous SIDs in the SID list of the SRH, and the first SID of the N SIDs is the next-hop SID of the BSID. In other words, the BSID and the N SIDs may form a first SID list, and the first SID list indicates a forwarding path. In this embodiment of this application, the first SID list may indicate a complete forwarding path of the first packet from the node R2 to the destination node, or the first SID list may indicate a part of the complete forwarding path, that is, indicate a forwarding path of the first packet from the node R2 to a first node. The first node is a node between the node R2 and the destination node of the first packet.

In an implementation of this embodiment of this application, if the target field is the N SIDs in the SID list of the SRH, in a specific implementation of S102, the node R2 may prestore a SID list, and the SID list stored in the node R2 indicates a valid path. Specifically, the node R2 may prestore one or more SID lists, and one SID list indicates one valid path. The node R2 may compare the first SID list with the locally stored SID lists. If the locally stored SID lists include the first SID list, it indicates that a path indicated by the first SID list is a valid path. Therefore, the node R2 may determine that the first packet passes the verification. On the contrary, if the locally stored SID lists do not include the first SID list, it is determined that the first packet fails the verification.

The SID lists stored in the node R2 may be understood with reference to the following Table 3. Table 3 shows two SID lists. Table 3 is output only for ease of understanding, and does not constitute a limitation on this embodiment of this application. The quantity of SID lists stored in the node R2 is not limited to two shown in Table 3. The SID lists stored in the node R2 are not limited to a BSID-SID 1-SID 2 and a BSID-SID 3 shown in Table 3.

**Table 3**

| Sequence number | SID list |
|---|---|
| 1 | **BSID** 1 |
| | SID 1 |
| | SID 2 |
| 2 | BSID 1 |
| | SID 3 |

As shown in Table 3, all first SIDs in the SID lists stored in the node R2 are BSIDs. In an implementation of this embodiment of this application, to improve the efficiency of determining, by the node R2, that the locally stored SID lists include the first SID list, when storing a SID list, the node R2 may store the first BSID in the SID list as an index of the SID list. When it is determined whether the locally stored SID lists include the first SID list, the BSID in the first SID list may be used as an index to determine whether the locally stored SID lists include the first SID list.

In an implementation, the SID list stored in the node R2 may be statically configured in the node R2. In still another implementation, the SID list stored in the node R2 may be delivered by the control management device to the node R2 by using the security protection policy.

As described above, the control management device may include the security protection policy in the BGP FS route and send the BGP FS route to the node R2. Specifically, the BGP FS message may be extended, a traffic matching condition type 17 and a traffic matching condition type 19 are added, the added traffic matching condition type 17 may carry the BSID, and the added traffic matching condition type 19 carries other to-be-verified SIDs.

For the type 17, refer to the foregoing descriptions of the type 17. Details are not described herein again. The following briefly describes the type 19.

Similar to the type 18, the type 19 includes a type field, an operator field, and a value field, that is, <type, [operator, value]+>.

The type field has a value of 19.

The value field is used for identifying a SID.

The operator field includes eight bits, which are respectively a bit 0 to a bit 7.

The plus sign "+" indicates that a plurality of combinations of [operator, value] can be included.

The meaning of each bit in the operator field is shown in the following Table 4:

**Table 4**

| Bit 0 | Bit 1 | Bit 2 | Bit 3 | Bit 4 | Bit 5 | Bit 6 | Bit 7 |
|---|---|---|---|---|---|---|---|
| e | Segment list number | | | | | | |

| | | | | | | | |
|---|---|---|---|---|---|---|---|
| E: An end-of-list bit. The value of E is 1, indicating that the current <operator, value> is the last combination of <operator, value>. Segment list number: Carrying a SID number. | | | | | | | |

For a security protection policy carrying a BSID and N SIDs, an example is described herein: For a service, a BSID b::1 is provided for a node outside a trusted domain, to provide guidance about a forwarding path in the domain. A valid path for forwarding may be represented by a SID list shown in the following Table 5.

**Table 5**

| | |
|---|---|
| Segment list[0] | D1::1 |
| Segment list[1] | D2::1 |
| Segment list[2] | D3::1 |
| Segment list[3] | B::1 |

In this case, for a edge node in the trusted domain, the control management device may use the BGP FS route to deliver the security protection policy. Specifically, the security protection policy includes: <0x11, b::1>, <0x13, [0x00, D1::1], [0x01, D2::1], [0x02, D3::1], [0x83, B::1]>.

0x11 indicates the type 17. b::1 indicates a valid BSID. 0x13 indicates the type 19. [0x00, D1::1] identifies Segment list[0]=D1::1. <0x13, [0x01, D2::1] indicates Segment list[1]=D2::1. [0x02, D3::1] indicates Segment list[2]=D3::1. [0x83, B::1] indicates Segment list[3]=B::1 and <0x13. [0x83, B::1]> is the last combination of <operator, value>.

After receiving <0x11, b::1>, <0x13, [0x00, D1::1], [0x01, D2::1], [0x02, D3::1] and [0x83, B::1] >, the node R2 may store the SID list. The SID list includes b:: 1, B::1, D3::1, D2::1, and D3::1.

In still another implementation of this embodiment of this application, if the target field is the N SIDs in the SID list of the SRH, in a specific implementation of S102, the node R2 may prestore several hash values. For example, the node R2 may prestore a hash table, and the hash table includes several hash values. The hash values stored in the node R2 are obtained by performing a hash operation on SID lists corresponding to valid path. In this case, the node R2 may perform a hash operation on the first SID list to obtain a first hash value. After obtaining the first hash value, the node R2 may search the several hash values that are locally stored, and determine whether the locally stored hash values include the first hash value that is calculated. Specifically, the several locally stored hash values may be searched for by using the first hash value as an index, so as to determine whether the locally stored hash values include the first hash value. If the locally stored hash values include the first hash value, it indicates that the path indicated by the first SID list is a valid path. Therefore, it may be determined that the first packet passes the verification. On the contrary, if the locally stored hash values do not include the first hash value, it is determined that the first packet fails the verification.

In this embodiment of this application, the first SID in the SID list corresponding to the valid path is the BSID. To help the node R2 determine that the locally stored hash values include the first hash value, when storing a hash value, the node R2 may store, as an index of the hash value, the first BSID in a SID list by using which the hash value is calculated. Correspondingly, when it is determined whether the locally stored hash values include the first hash value, the BSID in the first SID list may be used as an index to determine whether the locally stored hash values include the first hash value. Certainly, when storing a hash value, the node R2 may also correspondingly store a SID list by using which the hash value is calculated. This is not specifically limited in this embodiment of this application.

The hash values locally stored in the node R2 may be understood with reference to the following Table 6. Table 6 shows three possible hash value storage manners. In a first manner, only the hash value is stored. In a second manner, the hash value and the BSID are stored. In a third manner, the hash value and the SID list by using which the hash value is calculated are stored. Table 6 is shown only for ease of understanding, and does not constitute a limitation on this embodiment of this application.

**Table 6**

| Storage manner | Hash value | |
|---|---|---|
| | Sequence number | Content |
| 1 | 1 | Hash value 1 |
| | 2 | Hash value 2 |
| 2 | 1 | BSID 1, hash value 1 |
| | 2 | BSID 2, hash value 2 |
| 3 | 1 | BSID 1, SID 1, hash value 1 |
| | 2 | BSID 1, SID 2, hash value 2 |

In an implementation this embodiment of this application, the first packet may include a first field, and the first field may indicate a quantity of to-be-verified SIDs. After receiving the first packet, the node R2 may parse the first packet to obtain the value of the first field, so as to further obtain the BSID and the N SIDs in the SRH, and perform S 102 to verify the first packet. The first field is not specifically limited in this embodiment of this application. The first field may be a reserve field in the SRv6 packet, or the first field may be an extension field in the SRv6 packet. For example, the first field may be the last four bits of the flags field shown in FIG. 4. In this embodiment of this application, a value carried in the first field may be N, or may be N+1. This is not specifically limited in this embodiment of this application. Specifically, when the value carried in the first field is equal to N, a SID indicated by the first field does not include the destination address of the first packet, that is, does not include the BSID. When the value carried in the first field is equal to N+1, a SID indicated by the first field includes the destination address of the first packet, that is, includes the BSID.

In some embodiments, when storing a hash value, the node R2 may further correspondingly store the quantity of SIDs included in a SID list by using which the hash value is calculated. Correspondingly, when matching is performed between the first hash value and the locally stored hash values, the node R2 further performs matching based on the value of the first field, and compares the quantity of SIDs included in the first SID list by using which the first hash value is calculated with the quantity of SIDs in the locally stored hash table. Only when the locally stored hash table includes the first hash value, and the quantity of SIDs corresponding to the locally stored first hash value is equal to the quantity of SIDs included in the first SID list, it is determined that the first packet passes the verification. Otherwise, it is determined that the first packet fails the verification.

In this case, the hash table locally stored in the node R2 may be understood with reference to the following Table 7.

**Table 7**

| Type | Hash value | |
|---|---|---|
| | Sequence number | Content |
| 1 | 1 | Hash value 1, quantity a |
| | 2 | Hash value 2, quantity b |
| 2 | 1 | BSID 1, hash value 1, quantity a |
| | 2 | BSID 2, hash value 2, quantity b |
| 3 | 1 | BSID 1, SID 1, hash value 1, quantity a |
| | 2 | BSID 1, SID 2, hash value 2, quantity b |

A manner in which the node R2 verifies the first packet is described by using an example with reference to Table 7. It is assumed that a manner of storing a hash value in the node R2 is the first manner shown in Table 7. In this case, when verifying the first packet, the node R2 may, for example, find whether the locally stored hash values include the first hash value. If the first hash value is the hash value 1, the node R2 determines that the locally stored hash values include the first hash value. Further, because the quantity of SIDs included in a SID list by using which the hash value 1 is calculated is a, where the hash value 1 is among the locally stored hash values, if the quantity of SIDs included in the first SID list is a, the node R2 may determine that the first packet passes the verification. If the quantity of SIDs included in the first SID list is not a, the node R2 may determine that the first packet fails the verification. The quantity of SIDs included in the first SID list may be determined based on the value of the first field. Specifically, if to-be-verified SIDs indicated by the value of the first field do not include the BSID, the quantity of SIDs included in the first SID list is equal to the value of the first field plus 1. If to-be-verified SIDs indicated by the value of the first field include the BSID, the quantity of SIDs included in the first SID list is equal to the value of the first field.

It can be learned from the foregoing descriptions that when the first SID list indicates a complete forwarding path of the first packet from the node R2 to the destination node, in implementation 2, it can be ensured that the first packet can be forwarded to the valid destination node of the first packet. When the first SID list indicates a forwarding path of the first packet from the node R2 to the first node, in implementation 2, a network between the node R2 and the first node may avoid a network attack.

In addition, the computing resources consumed by the node R2 to maintain the locally stored SID lists or hash values are far less than the computing resources consumed by the node R2 to protect the key and ensure the security of the hash algorithm. Therefore, according to the solution in this embodiment of this application, the security risks that exist in forwarding a packet by using the SRv6 technology can be reduced as much as possible, on the premise of ensuring the performance of the node R2.

Implementation 3: The target field is the SL field.

As described above, the trusted domain may provide a BSID to indicate a forwarding path of the SRv6 packet in the trusted domain. In some embodiments, a node outside a domain needs to forward an SRv6 packet to the trusted domain. In this case, the SRH of the first packet does not contain a next-hop SID of the BSID. In other words, the BSID is the last SID that indicates the forwarding path of the first packet. In this case, the value of the SL field in the first packet is 0. Therefore, to ensure that the SRv6 packet to be forwarded to the trusted domain can be normally forwarded to the trusted domain, in a specific implementation of S102, for example, the node R2 may determine whether the BSID is in the trusted domain. Then, the node R2 determines whether the value of the SL field is 0. When the value of the SL field is 0, it indicates that the destination node of the first packet is a node in the trusted domain. Therefore, it may be determined that the first packet passes the verification. When the value of the SL field is not 0, the node R2 may verify the first packet in implementation 1 or implementation 2 above.

S103a: The node R2 discards the first packet that fails the verification.

That the node R2 discards the first packet may be: For example, the node R2 deletes the first packet from local storage.

S103b: The node R2 forwards the first packet that passes the verification.

In this embodiment of this application, in a specific implementation of forwarding the first packet, for example, the node R2 may obtain a SID list corresponding to the BSID, re-encapsulate the first packet based on the SID list, and forward the re-encapsulated first packet. For a specific implementation in which the node R2 re-encapsulates the first packet based on the SID list, refer to the foregoing descriptions of FIG. 3b and FIG. 3c. Details are not described herein again.

It can be learned from the foregoing descriptions that, according to the packet forwarding method in this embodiment of this application, the security risks that exist in forwarding a packet by using the SRv6 technology can be reduced as much as possible, on the premise of ensuring the performance of the node R2.

In an embodiment of embodiments of this application, the node R2 may further obtain a second packet. Similar to the first packet, the second packet is also an SRv6 packet, and a destination address of the second packet is the BSID. After receiving the second packet, the node R2 may verify the second packet based on the BSID of the second packet and a target field in an SRH of the second packet. A specific implementation in which the node R2 verifies the second packet is similar to a method in which the node R2 verifies the first packet, and details are not described herein again. After verifying the second packet, the node R2 may forward the second packet when the second packet passes the verification. During verification of the second packet, not only the BSID is verified, but also the target field is verified. Therefore, the second packet that passes the verification may be considered as a valid packet, and forwarding the second packet across the trusted domain does not bring security risks.

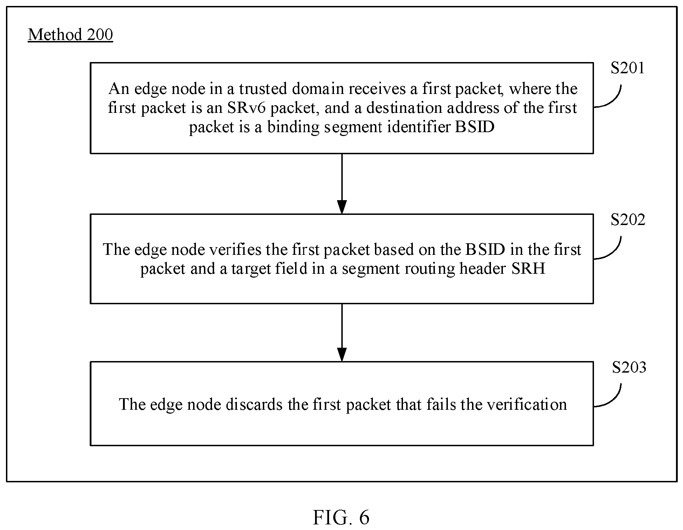

Embodiments of this application further provide a packet forwarding method 200. FIG. 6 is a schematic flowchart of the packet forwarding method according to an embodiment of this application. The following describes the method with reference to FIG. 6. The method shown in FIG. 6 may be implemented, for example, by using S201 to S203.

S201: An edge node in a trusted domain receives a first packet, where the first packet is an SRv6 packet, and a destination address of the first packet is a binding segment identifier BSID.

S202: The edge node verifies the first packet based on the BSID in the first packet and a target field in a segment routing header SRH.

S203: The edge node discards the first packet that fails the verification.

The method 200 may be used to implement S101, S102, and S103a that are performed by the node R2 in the method 100 mentioned in the foregoing embodiment. When the method 200 is used to implement S101, S102, and S103a that are performed by the node R2 in the method 100 mentioned in the foregoing embodiment, the edge node in the trusted domain corresponds to the node R2 in the method 100, and the first packet corresponds to the first packet in the method 100.

In an implementation, the edge node may further receive a security protection policy from a control management device, where the security protection policy indicates the edge node to verify the first packet based on the BSID and the target field in the SRH.

In an implementation, the target field includes a next-hop SID of the BSID; the target field includes N SIDs in a field identifier SID list, where the first SID in the N SIDs is the next-hop SID of the BSID, N is greater than or equal to 1, and when N is greater than 1, the N SIDs are continuous N SIDs in the SID list; or the target field includes a segment left SL field.

In an implementation, when the target field includes the next-hop SID of the BSID, that the edge node verifies the first packet based on the BSID in the first packet and the target field in the segment routing header SRH includes: When the BSID is in the trusted domain and the target field is not in a valid network segment, the edge node determines that the first packet fails the verification, where a valid destination node of the first packet is located in the valid network segment.

In an implementation, the valid network segment is indicated by a locator route of the valid destination node. The valid destination node mentioned herein may correspond to, for example, the node R5 in the second domain 300 shown in FIG. 3a.

In an implementation, the security protection policy carries the valid network segment, or the valid network segment is statically configured in the edge node.

In an implementation, when the target field includes the next-hop SID of the BSID, that the edge node verifies the first packet based on the BSID in the first packet and the target field in the segment routing header SRH includes: When the BSID is in the trusted domain and the target field is in a first network segment, the edge node determines that the first packet fails the verification, where a node in the trusted domain belongs to the first network segment. The first network segment mentioned herein may correspond to a network segment to which a node in the trusted domain 200 belongs, as shown in FIG. 3c.

In an implementation, the security protection policy carries the first network segment, or the first network segment is statically configured in the edge node.

In an implementation, when the target field includes the N SIDs in the SID list, that the edge node verifies the first packet based on the BSID in the first packet and the target field in the segment routing header SRH includes: The edge node compares a first SID list including the BSID and the target field with a SID list stored in the edge node, and if the SID list stored in the edge node does not include the first SID list, the edge node determines that the first packet fails the verification, where the SID list stored in the edge node indicates a valid path.

In an implementation, when the target field includes the N SIDs in the SID list, that the edge node verifies the first packet based on the BSID in the first packet and the target field in the segment routing header SRH includes: The edge node performs a hash operation on the first SID list including the BSID and the target field, to obtain a first hash value; and if a hash value stored in the edge node does not include the first hash value, the edge node determines that the first packet fails the verification, where the hash value stored in the edge node is obtained by performing the hash operation on the SID list that indicates a valid path.

In an implementation, the first packet includes a first field, and the first field indicates a quantity of to-be-verified SIDs.

In an implementation, the security protection policy carries the SID list that indicates a valid path, or the SID list that indicates a valid path is statically configured in the edge node.

In an implementation, when the target field includes the SL field, that the edge node verifies the first packet based on the BSID in the first packet and the target field in the segment routing header SRH includes:

The edge node determines that the BSID is in the trusted domain; and when a value of the target field is not equal to 0, the edge node determines that the first packet fails the verification.

In an implementation, the edge node may further obtain a second packet, where the second packet is an SRv6 packet, and a destination address of the second packet is the binding segment identifier BSID. The edge node verifies the second packet based on the BSID in the second packet and a target field in an SRH of the second packet; and the edge node forwards the second packet that passes the verification.

For a specific implementation of the method 200, refer to the foregoing descriptions of S101, S102, and S103a in the method 100. Details are not described herein again.

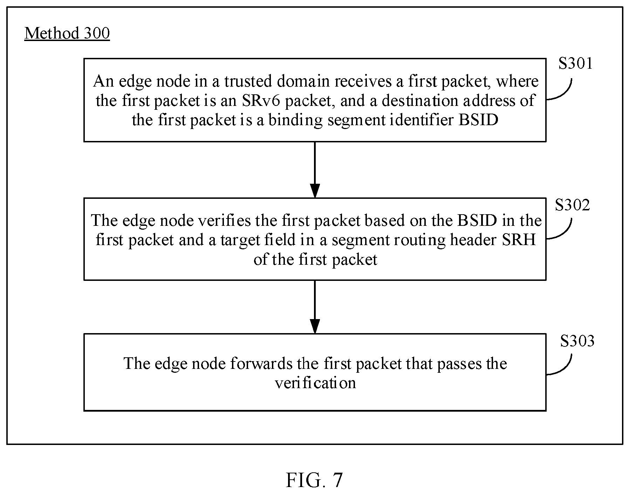

Embodiments of this application further provide a packet forwarding method 300. FIG. 7 is a schematic flowchart of the packet forwarding method according to an embodiment of this application. The following describes the method with reference to FIG. 7. The method shown in FIG. 7 may be implemented, for example, by using S301 to S303.

S301: An edge node in a trusted domain receives a first packet, where the first packet is an SRv6 packet, and a destination address of the first packet is a binding segment identifier BSID.

S302: The edge node verifies the first packet based on the BSID in the first packet and a target field in a segment routing header SRH of the first packet.

S303: The edge node forwards the first packet that passes the verification.

The method 300 may be used to implement S101, S102, and S103b that are performed by the node R2 in the method 100 mentioned in the foregoing embodiment. When the method 200 is used to implement S101, S102, and S103b that are performed by the node R2 in the method 100 mentioned in the foregoing embodiment, the edge node in the trusted domain corresponds to the node R2 in the method 100, and the first packet corresponds to the first packet in the method 100.

In an implementation, the edge node may further receive a security protection policy from a control management device, where the security protection policy indicates the edge node to verify the first packet based on the BSID and the target field in the SRH.

In an implementation, the target field includes a next-hop SID of the BSID; the target field includes N SIDs in a field identifier SID list, where the first SID in the N SIDs is the next-hop SID of the BSID, N is greater than or equal to 1, and when N is greater than 1, the N SIDs are continuous N SIDs in the SID list; or the target field includes a segment left SL field.

In an implementation, when the target field includes the next-hop SID of the BSID, in a specific implementation in which the edge node verifies the first packet based on the BSID in the first packet and the target field in the segment routing header SRH, when determining that the BSID is in the trusted domain and the target field is in a valid network segment, the edge node determines that the first packet passes the verification. A valid destination node of the first packet is located in the valid network segment.

In an implementation, the valid network segment is indicated by a locator route of the valid destination node. The valid destination node mentioned herein may correspond to, for example, the node R5 in the second domain 300 shown in FIG. 3a.

In an implementation, the security protection policy carries the valid network segment, or the valid network segment is statically configured in the edge node.

In an implementation, when the target field includes the next-hop SID of the BSID, in a specific implementation in which the edge node verifies the first packet based on the BSID in the first packet and the target field in the segment routing header SRH, for example, the edge node determines that the BSID is in the trusted domain and the target field is not in a first network segment, the edge node determines that the first packet passes the verification. A node in the trusted domain belongs to the first network segment. The first network segment mentioned herein may correspond to a network segment to which a node in the trusted domain 200 belongs, as shown in FIG. 3c.

In an implementation, the security protection policy carries the first network segment, or the first network segment is statically configured in the edge node.

In an implementation, when the target field includes the N SIDs in the SID list, in a specific implementation in which the edge node verifies the first packet based on the BSID in the first packet and the target field in the segment routing header SRH, for example, the edge node may compare a first SID list including the BSID and the target field with a SID list stored in the edge node, and if the SID list stored in the edge node includes the first SID list, the edge node determines that the first packet passes the verification, where the SID list stored in the edge node indicates a valid path.

In an implementation, when the target field includes the N SIDs in the SID list, that the edge node verifies the first packet based on the BSID in the first packet and the target field in the segment routing header SRH includes: The edge node performs a hash operation on the first SID list including the BSID and the target field, to obtain a first hash value; and if a hash value stored in the edge node includes the first hash value, the edge node determines that the first packet passes the verification, where the hash value stored in the edge node is obtained by performing the hash operation on the SID list that indicates a valid path.

In an implementation, the first packet includes a first field, and the first field indicates a quantity of to-be-verified SIDs.

In an implementation, the security protection policy carries the SID list that indicates a valid path, or the SID list that indicates a valid path is statically configured in the edge node.

In an implementation, when the target field includes the SL field, in a specific implementation in which the edge node verifies the first packet based on the BSID in the first packet and the target field in the segment routing header SRH, for example, when determining that the BSID is in the trusted domain and the value of the edge node in the target field is equal to 0, the edge node may determine that the first packet passes the verification.

For a specific implementation of the method 300, refer to the foregoing descriptions of S101, S102, and S103b in the method 100. Details are not described herein again.

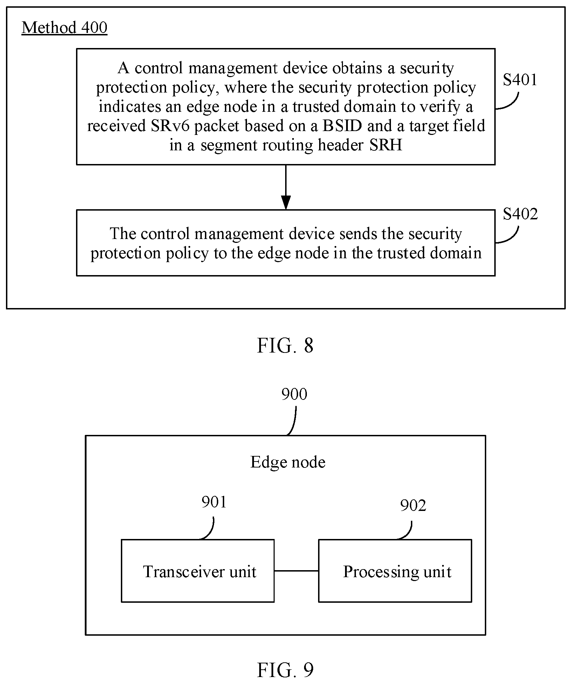

Embodiments of this application further provide a forwarding control method 400. FIG. 8 is a schematic flowchart of the forwarding control method according to an embodiment of this application. The following describes the method with reference to FIG. 8. The method shown in FIG. 8 may be implemented, for example, by using S401 and S402.

S401: A control management device obtains a security protection policy, where the security protection policy indicates an edge node in a trusted domain to verify a received SRv6 packet based on a BSID and a target field in a segment routing header SRH.

S402: The control management device sends the security protection policy to the edge node in the trusted domain.

The method 400 may be used to implement the steps performed by the control management device in the method 100 mentioned in the foregoing embodiment. The trusted domain in the method 400 may be the trusted domain 200 shown in FIG. 3a. The edge node in the trusted domain in the method 400 may correspond to the node R2 in the method 100.

In an implementation, the control management device may send the security protection policy to the edge node in the trusted domain by using a PCEP message.

In an implementation, the control management device may send the security protection policy to the edge node in the trusted domain by using a BGP message.

In an implementation, the control management device may send the security protection policy to the edge node in the trusted domain by using a NETCONF packet.

In an implementation, the control management device may send the security protection policy to the edge node in the trusted domain by using an SNMP packet.

In an implementation, the target field includes a next-hop SID of the BSID; the target field includes N SIDs in a field identifier SID list, where the first SID in the N SIDs is the next-hop SID of the BSID, N is greater than or equal to 1, and when N is greater than 1, the N SIDs are continuous N SIDs in the SID list; or the target field includes a segment left SL field.

In an implementation, if the target field includes the next-hop SID of the BSID, the security protection policy carries a valid BSID and a valid network segment in the trusted domain.

In an implementation, the valid BSID and the valid network segment in the trusted domain may be carried in an extended attribute of the BGP FS message. For example, the valid BSID in the trusted domain is carried in an extended attribute type 17 of the BGP FS message, and the valid network segment is carried in an extended attribute type 18 of the BGP FS message.

In an implementation, if the target field includes the next-hop SID of the BSID, the security protection policy carries a valid BSID and a first network segment in the trusted domain.

In an implementation, the valid BSID and the first network segment in the trusted domain may be carried in an extended attribute of the BGP FS message. For example, the valid BSID in the trusted domain is carried in an extended attribute type 17 of the BGP FS message, and the first network segment is carried in an extended attribute type 18 of the BGP FS message.

In an implementation, if the target field includes the N SIDs in the segment identifier SID list, the security protection policy carries a SID list that indicates a valid path, and the SID list includes a valid BSID in the trusted domain.

In an implementation, the SID list that indicates a valid path may be carried in an extended attribute of the BGP FS message. For example, the SID list that indicates a valid path may be carried in an extended attribute type 19 of the BGP FS message.

For a specific implementation of the method 400, refer to the foregoing descriptions of the steps performed by the control management device in the method 100. Details are not described herein again.

In addition, an embodiment of this application further provides an edge node 900. FIG. 9 is a schematic structural diagram of the edge node according to this embodiment of this application. The edge node 900 includes a transceiver unit 901 and a processing unit 902. The transceiver unit 901 is configured to perform receiving and sending operations performed by the node R2 in the embodiment corresponding to the method 100. The processing unit 902 is configured to perform an operation other than the receiving and sending operations performed by the node R2 in the embodiment corresponding to the method 100. For example, the edge node 900 is the node R2 in the method 100. In this case, the transceiver unit 901 is configured to perform the step of receiving a first packet. The processing unit 902 is configured to perform the step of verifying the first packet based on the BSID and a target field in an SRH, and discarding the first packet that fails the verification.

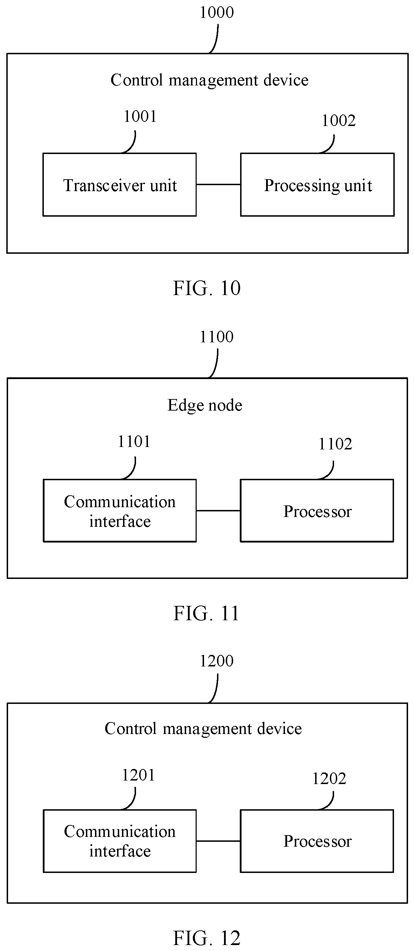

In addition, an embodiment of this application further provides a control management device 1000, as shown in FIG. 10. FIG. 10 is a schematic structural diagram of the control management device according to this embodiment of this application. The control management device 1000 includes a transceiver unit 1001 and a processing unit 1002. The transceiver unit 1001 is configured to perform sending and receiving operations performed by the control management device in the foregoing embodiments. The processing unit 1002 is configured to perform an operation other than the sending and receiving operations performed by the control management device mentioned in the foregoing embodiments. For example, the transceiver unit 1001 is configured to send a security protection policy to an edge node in a trusted domain, and the processing unit 1002 is configured to obtain the security protection policy.

In addition, an embodiment of this application further provides an edge node 1100. FIG. 11 is a schematic structural diagram of the edge node according to this embodiment of this application. The edge node 1100 includes a communication interface 1101 and a processor 1102 connected to the communication interface 1101. The communication interface 1101 is configured to perform receiving and sending operations performed by the node R2 in the embodiment corresponding to the method 100. The processor 1102 is configured to perform an operation other than the receiving and sending operations performed by the node R2 in the embodiment corresponding to the method 100. For example, the edge node 1100 is the node R2 in the method 100. In this case, the communication interface 1101 is configured to perform the step of receiving a first packet. The processor 1102 is configured to perform the step of verifying the first packet based on the BSID and a target field in an SRH, and discarding the first packet that fails the verification.

In addition, an embodiment of this application further provides a control management device 1200. FIG. 12 is a schematic structural diagram of the control management device according to this embodiment of this application. The control management device 1200 includes a communication interface 1201 and a processor 1202 connected to the communication interface 1201. The communication interface 1201 is configured to perform sending and receiving operations performed by the control management device in the foregoing embodiments. The processor 1202 is configured to perform an operation other than the sending and receiving operations performed by the control management device mentioned in the foregoing embodiments. For example, the communication interface 1201 is configured to send a security protection policy to an edge node in a trusted domain, and the processor 1202 is configured to obtain the security protection policy.

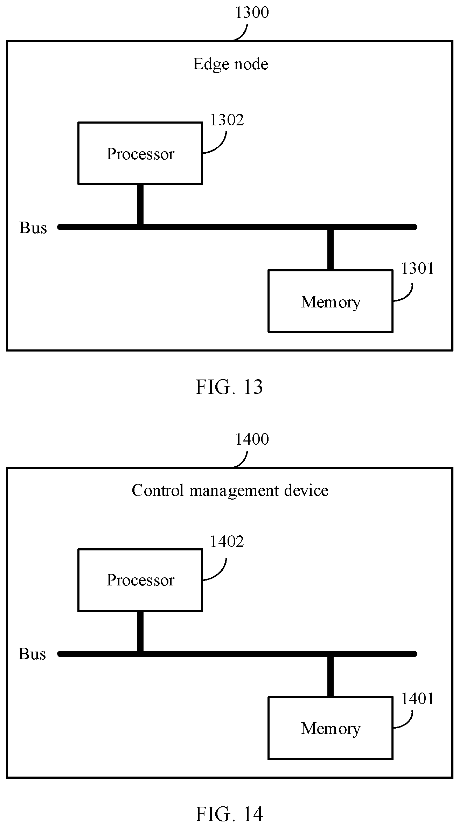

In addition, an embodiment of this application further provides an edge node 1300. FIG. 13 is a schematic structural diagram of the edge node according to this embodiment of this application. The edge node 1300 includes a memory 1301 and a processor 1302. The memory 1301 is configured to store program code. The processor 1302 is configured to run instructions in the program code, to enable the edge node 1300 to perform the steps performed by the node R2 in the embodiment corresponding to the foregoing method 100.

In addition, an embodiment of this application further provides a control management device 1400. FIG. 14 is a schematic structural diagram of the control management device according to this embodiment of this application. The control management device 1400 includes a memory 1401 and a processor 1402. The memory 1401 is configured to store program code. The processor 1402 is configured to run instructions in the program code, to enable the control management device 1400 to perform the steps performed by the control management device in the foregoing embodiments.

An embodiment of this application further provides a computer-readable storage medium. The computer-readable storage medium stores instructions. When the instructions are run on a computer, the computer is enabled to perform the steps performed by the node R2 in the foregoing method 100, or the computer is enabled to perform the steps performed by the control management device in the foregoing method 100.

An embodiment of this application further provides a communication system. The communication system includes a control management device and an edge node. In some embodiments, the edge node is the node R2 that performs the foregoing method 100. In some embodiments, the control management device is the control management device that delivers the security protection policy to the node R2 in the foregoing method 100.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical service division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that, in the foregoing one or more examples, services described in the present invention may be implemented by hardware, software, firmware, or any combination thereof. When the present invention is implemented by using the software, the services may be stored in a computer-readable medium or transmitted as one or more instructions or code in the computer-readable medium. The computer-readable medium includes a computer storage medium and a communication medium. The communication medium includes any medium that facilitates transmission of a computer program from one place to another. The storage medium may be any available medium accessible to a general-purpose or dedicated computer.

The objectives, technical solutions, and beneficial effects of the present invention have been further described in detail in the foregoing specific implementations. It should be understood that the foregoing descriptions are merely specific implementations of the present invention.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions recorded in the foregoing embodiments or make equivalent replacements to some technical features thereof. However, these modifications or replacements do not make the essence of the corresponding technical solutions depart from the scope of the technical solutions of the foregoing embodiments of this application.

## Claims

1. A packet forwarding method (200), comprising:
receiving (S201), by an edge node in a segment routing over internet protocol version 6, SRv6, trusted domain, a first packet, wherein the first packet is an SRv6 packet, and a destination address of the first packet is a binding segment identifier, BSID,
verifying (S202), by the edge node, the first packet based on the BSID in the first packet and a target field in a segment routing header, SRH, of the first packet; and
discarding (S203), by the edge node, the first packet when the first packet fails the verification.

2. The method (200) according to claim 1, wherein the method further comprises:
receiving, by the edge node, a security protection policy from a control management device, wherein the security protection policy indicates the edge node to verify the first packet based on the BSID and the target field in the SRH.

3. The method (200) according to claim 1 or 2, wherein the target field comprises one or more of the following:
a next-hop SID of the BSID;
N SIDs in a segment identifier, SID, list, wherein the first SID in the N SIDs is the next-hop SID of the BSID, and N is greater than or equal to 1; and
a segment left, SL, field.

4. The method (200) according to claim 3, wherein when the target field comprises the next-hop SID of the BSID, the verifying, by the edge node, the first packet based on the BSID in the first packet and a target field in a segment routing header, SRH, comprises:
if determining that the BSID is in the trusted domain, and determining that the next-hop SID does not belong to a valid network segment, determining, by the edge node, that the first packet fails the verification, wherein a valid destination node of the first packet is located in the valid network segment.

5. The method (200) according to claim 3, wherein when the target field comprises the next-hop SID of the BSID, the verifying, by the edge node, the first packet based on the BSID in the first packet and a target field in a segment routing header, SRH, comprises:
when determining that the BSID is in the trusted domain, and determining that the target field belongs to a first network segment, determining, by the edge node, that the first packet fails the verification, wherein a node in the trusted domain belongs to the first network segment.

6. The method (200) according to claim 3, wherein the target field comprises the N SIDs in the SID list of the SRH, and the verifying, by the edge node, the first packet based on the BSID in the first packet and a target field in a segment routing header, SRH, wherein N is a positive integer comprises:
comparing, by the edge node, a first SID list comprising the BSID and the N SIDs with a SID list stored in the edge node, and if the SID list stored in the edge node does not comprise the first SID list, determining, by the edge node, that the first packet fails the verification, wherein the SID list stored in the edge node indicates a valid path.

7. The method (200) according to claim 3, wherein the target field comprises the N SIDs in the SID list of the SRH, and the verifying, by the edge node, the first packet based on the BSID in the first packet and a target field in a segment routing header SRH, wherein N is a positive integer comprises:
performing, by the edge node, a hash operation on a first SID list comprising the BSID and the N SIDs, to obtain a first hash value; and
if a hash value stored in the edge node does not comprise the first hash value, determining, by the edge node, that the first packet fails the verification, wherein the hash value stored in the edge node is obtained by performing the hash operation on the SID list that indicates a valid path.

8. The method (200) according to claim 3, wherein when the target field comprises the SL field, the verifying, by the edge node, the first packet based on the BSID in the first packet and a target field in a segment routing header, SRH, comprises:
determining, by the edge node, that the BSID is in the trusted domain; and
when a value of the target field is not equal to 0, determining, by the edge node, that the first packet fails the verification.

9. The method (200) according to any one of claims 1 to 8, wherein the method further comprises:
receiving, by the edge node, a second packet, wherein the second packet is an SRv6 packet, and a destination address of the second packet is the binding segment identifier BSID;
verifying, by the edge node, the second packet based on the BSID in the second packet and a target field in an SRH of the second packet; and
forwarding, by the edge node, the second packet that passes the verification.

10. The method (200) according to any one of claims 3 to 9 when depending on claim 3, wherein the security protection policy is carried in one of the following form:
a path computation element communication protocol, PCEP, message;
a border gateway protocol, BGP, message;
a network configuration protocol, NETCONF, packet; or
a simple network management protocol, SNMP, packet.

11. A packet forwarding apparatus, applied to an edge node in a segment routing over internet protocol version 6, SRv6, trusted domain, and comprising:
a receiving unit, configured to receive a first packet, wherein the first packet is an SRv6 packet, and a destination address of the first packet is a binding segment identifier, BSID; and
a processing unit, configured to verify the first packet based on the BSID in the first packet and a target field in a segment routing header, SRH, of the first packet, wherein
the processing unit is further configured to discard the first packet when the first packet fails the verification.

12. The apparatus according to claim 11, wherein
the receiving unit is further configured to receive a security protection policy from a control management device, wherein the security protection policy indicates the edge node to verify the first packet based on the BSID and the target field in the SRH.

13. The apparatus according to claim 11 or 12, wherein the target field comprises one or more of the following:
a next-hop SID of the BSID;
N SIDs in a segment identifier, SID, list, wherein the first SID in the N SIDs is the next-hop SID of the BSID, and N is greater than or equal to 1; and
a segment left, SL, field.

14. The apparatus according to claim 12, wherein the security protection policy is carried in one of the following form:
a path computation element communication protocol, PCEP, message;
a border gateway protocol, BGP, message;
a network configuration protocol, NETCONF, packet; or
a simple network management protocol, SNMP, packet.

## Patentansprüche

1. Paketweiterleitungsverfahren (200), umfassend:
Empfangen (S201), durch einen Randknoten in einer Segment-Routing-over-Internet-Protocol-Version-6-Vertrauensdomäne,
SRv6-Vertrauensdomäne, eines ersten Pakets, wobei das erste Paket ein SRv6-Paket ist und eine Zielortadresse des ersten Pakets eine Bindungssegmentkennung, BSID, ist;
Überprüfen (S202), durch den Randknoten, des ersten Pakets basierend auf der BSID in dem ersten Paket und einem Zielfeld in einem Segment-Routing-Header, SRH, des ersten Pakets; und
Verwerfen (S203), durch den Randknoten, des ersten Pakets, wenn das erste Paket die Überprüfung nicht besteht.

2. Verfahren (200) nach Anspruch 1, wobei das Verfahren ferner Folgendes umfasst:
Empfangen, durch den Randknoten, einer Sicherheitsschutzrichtlinie von einer Steuerungsverwaltungsvorrichtung, wobei die Sicherheitsschutzrichtlinie den Randknoten anweist, das erste Paket basierend auf der BSID und dem Zielfeld in dem SRH zu überprüfen.

3. Verfahren (200) nach Anspruch 1 oder 2, wobei das Zielfeld eines oder mehrere von Folgendem umfasst:
einer Next-Hop-SID der BSID;
N SIDs in einer Segmentkennungsliste, SID-Liste, wobei die erste SID in den N SIDs die Next-Hop-SID der BSID ist und N größer als oder gleich 1 ist; und
einem Segment-links-Feld, SL-Feld.

4. Verfahren (200) nach Anspruch 3, wobei, wenn das Zielfeld die Next-Hop-SID der BSID umfasst, das Überprüfen, durch den Randknoten, des ersten Pakets basierend auf der BSID in dem ersten Paket und einem Zielfeld in einem Segment-Routing-Header, SRH, Folgendes umfasst:
bei Bestimmen, dass sich die BSID in der Vertrauensdomäne befindet, und Bestimmen, dass die Next-Hop-SID nicht zu einem gültigen Netzsegment gehört, Bestimmen, durch den Randknoten, dass das erste Paket die Überprüfung nicht besteht, wobei sich ein gültiger Zielortknoten des ersten Pakets in dem gültigen Netzsegment befindet.

5. Verfahren (200) nach Anspruch 3, wobei, wenn das Zielfeld die Next-Hop-SID der BSID umfasst, das Überprüfen, durch den Randknoten, des ersten Pakets basierend auf der BSID in dem ersten Paket und einem Zielfeld in einem Segment-Routing-Header, SRH, Folgendes umfasst:
bei Bestimmen, dass sich die BSID in der Vertrauensdomäne befindet, und Bestimmen, dass das Zielfeld zu einem ersten Netzsegment gehört, Bestimmen, durch den Randknoten, dass das erste Paket die Überprüfung nicht besteht, wobei ein Knoten in der Vertrauensdomäne zu dem ersten Netzsegment gehört.

6. Verfahren (200) nach Anspruch 3, wobei das Zielfeld die N SIDs in der SID-Liste des SRH umfasst und das Überprüfen, durch den Randknoten, des ersten Pakets basierend auf der BSID in dem ersten Paket und einem Zielfeld in einem Segment-Routing-Header, SRH, wobei N eine positive Ganzzahl ist, Folgendes umfasst:
Vergleichen, durch den Randknoten, einer ersten SID-Liste, umfassend die BSID und die N SIDs, mit einer SID-Liste, die in dem Randknoten gespeichert ist, und, falls die SID-Liste, die in dem Randknoten gespeichert ist, nicht die erste SID-Liste umfasst, Bestimmen, durch den Randknoten, dass das erste Paket die Überprüfung nicht besteht, wobei die SID-Liste, die in dem Randknoten gespeichert ist, einen gültigen Pfad angibt.

7. Verfahren (200) nach Anspruch 3, wobei das Zielfeld die N SIDs in der SID-Liste des SRH umfasst und das Überprüfen, durch den Randknoten, des ersten Pakets basierend auf der BSID in dem ersten Paket und einem Zielfeld in einem Segment-Routing-Header, SRH, wobei N eine positive Ganzzahl ist, Folgendes umfasst:
Durchführen, durch den Randknoten, eines Hash-Vorgangs an einer ersten SID-Liste, umfassend die BSID und die N SIDs, um einen ersten Hash-Wert zu erlangen; und
falls ein Hash-Wert, der in dem Randknoten gespeichert ist, nicht den ersten Hash-Wert umfasst, Bestimmen, durch den Randknoten, dass das erste Paket die Überprüfung nicht besteht, wobei der Hash-Wert, der in dem Randknoten gespeichert ist, durch Durchführen des Hash-Vorgangs an der SID-Liste, die einen gültigen Pfad angibt, erlangt wird.

8. Verfahren (200) nach Anspruch 3, wobei, wenn das Zielfeld das SL-Feld umfasst, das Überprüfen, durch den Randknoten, des ersten Pakets basierend auf der BSID in dem ersten Paket und einem Zielfeld in einem Segment-Routing-Header, SRH, Folgendes umfasst:
Bestimmen, durch den Randknoten, dass sich die BSID in der Vertrauensdomäne befindet; und
wenn ein Wert des Zielfelds nicht gleich 0 ist, Bestimmen, durch den Randknoten, dass das erste Paket die Überprüfung nicht besteht.

9. Verfahren (200) nach einem der Ansprüche 1 bis 8, wobei das Verfahren ferner Folgendes umfasst:
Empfangen, durch den Randknoten, eines zweiten Pakets, wobei das zweite Paket ein SRv6-Paket ist und eine Zielortadresse des zweiten Pakets die Bindungssegmentkennung, BSID, ist;
Überprüfen, durch den Randknoten, des zweiten Pakets basierend auf der BSID in dem zweiten Paket und einem Zielfeld in einem SRH des zweiten Pakets; und
Weiterleiten, durch den Randknoten, des zweiten Pakets, das die Überprüfung besteht.

10. Verfahren (200) nach einem der Ansprüche 3 bis 9, wenn abhängig von Anspruch 3, wobei die Sicherheitsschutzrichtlinie in einer der folgenden Formen enthalten ist:
einer Pfadberechnungselementkommunikationsprotokoll-Nachricht, PCEP-Nachricht;
einer Border-Gateway-Protocol-Nachricht, BGP-Nachricht;
einem Netzkonfigurationsprotokoll-Paket, NETCONF-Paket; oder
einem einfachen Netzverwaltungsprotokoll-Paket, SNMP-Paket.

11. Paketweiterleitungseinrichtung, die auf einen Randknoten in einer Segment-Routing-over-Internet-Protocol-Version-6-Vertrauensdomäne, SRv6-Vertrauensdomäne, angewandt wird und Folgendes umfasst:
eine Empfangseinheit, die dazu konfiguriert ist, ein erstes Paket zu empfangen, wobei das erste Paket ein SRv6-Paket ist und eine Zielortadresse des ersten Pakets eine Bindungssegmentkennung, BSID, ist; und
eine Verarbeitungseinheit, die dazu konfiguriert ist, das erste Paket basierend auf der BSID in dem ersten Paket und einem Zielfeld in einem Segment-Routing-Header, SRH, des ersten Pakets zu überprüfen, wobei
die Verarbeitungseinheit ferner dazu konfiguriert ist, das erste Paket zu verwerfen, wenn das erste Paket die Überprüfung nicht besteht.

12. Einrichtung nach Anspruch 11, wobei
die Empfangseinheit ferner dazu konfiguriert ist, eine Sicherheitsschutzrichtlinie von einer Steuerungsverwaltungsvorrichtung zu empfangen, wobei die Sicherheitsschutzrichtlinie den Randknoten anweist, das erste Paket basierend auf der BSID und dem Zielfeld in dem SRH zu überprüfen.

13. Einrichtung nach Anspruch 11 oder 12, wobei das Zielfeld eines oder mehrere von Folgendem umfasst:
einer Next-Hop-SID der BSID;
N SIDs in einer Segmentkennungsliste, SID-Liste, wobei die erste SID in den N SIDs die Next-Hop-SID der BSID ist und N größer als oder gleich 1 ist; und
einem Segment-links-Feld, SL-Feld.

14. Einrichtung nach Anspruch 12, wobei die Sicherheitsschutzrichtlinie in einer der folgenden Formen enthalten ist:
einer Pfadberechnungselementkommunikationsprotokoll-Nachricht, PCEP-Nachricht;
einer Border-Gateway-Protocol-Nachricht, BGP-Nachricht;
einem Netzkonfigurationsprotokoll-Paket, NETCONF-Paket; oder
einem einfachen Netzverwaltungsprotokoll-Paket, SNMP-Paket.

## Revendications

1. Procédé de transfert de paquets (200), comprenant :
la réception (S201), par un nœud périphérique dans un routage de segment sur un domaine de confiance de protocole Internet version 6, SRv6, d'un premier paquet, dans lequel le premier paquet est un paquet SRv6, et une adresse de destination du premier paquet est un identifiant de segment de liaison, BSID ; la vérification (S202), par le nœud périphérique, du premier paquet sur la base du BSID dans le premier paquet et d'un champ cible dans un en-tête de routage de segment, SRH, du premier paquet ; et
le rejet (S203), par le nœud périphérique, du premier paquet lorsque le premier paquet échoue à la vérification.

2. Procédé (200) selon la revendication 1, dans lequel le procédé comprend également :
la réception, par le nœud périphérique, d'une politique de protection de sécurité provenant d'un dispositif de gestion de commande, dans lequel la politique de protection de sécurité indique le nœud périphérique pour vérifier le premier paquet sur la base du BSID et du champ cible dans le SRH.

3. Procédé (200) selon la revendication 1 ou 2, dans lequel le champ cible comprend l'un ou plusieurs des éléments suivants :
un SID de saut suivant du BSID ;
N SID dans une liste d'identifiants de segment, SID, dans lequel le premier SID dans les N SID est le SID de saut suivant du BSID, et N est supérieur ou égal à 1 ; et
un champ de segment restant, SL.

4. Procédé (200) selon la revendication 3, dans lequel lorsque le champ cible comprend le SID de saut suivant du BSID, la vérification, par le nœud périphérique, du premier paquet sur la base du BSID dans le premier paquet et d'un champ cible dans un en-tête de routage de segment, SRH, comprend :
s'il est déterminé que le BSID est dans le domaine de confiance, et qu'il est déterminé que le SID de saut suivant n'appartient pas à un segment de réseau valide, la détermination, par le nœud périphérique, que le premier paquet échoue à la vérification, dans lequel un nœud de destination valide du premier paquet est situé dans le segment de réseau valide.

5. Procédé (200) selon la revendication 3, dans lequel lorsque le champ cible comprend le SID de saut suivant du BSID, la vérification, par le nœud périphérique, du premier paquet sur la base du BSID dans le premier paquet et d'un champ cible dans un en-tête de routage de segment, SRH, comprend :
lors de la détermination que le BSID est dans le domaine de confiance, et de la détermination que le champ cible appartient à un premier segment de réseau, la détermination, par le nœud périphérique, que le premier paquet échoue à la vérification, dans lequel un nœud dans le domaine de confiance appartient au premier segment de réseau.

6. Procédé (200) selon la revendication 3, dans lequel le champ cible comprend les N SID dans la liste de SID du SRH, et la vérification, par le nœud périphérique, du premier paquet sur la base du BSID dans le premier paquet et d'un champ cible dans un en-tête de routage de segment, SRH, dans lequel N est un entier positif, comprend :
la comparaison, par le nœud périphérique, d'une première liste de SID comprenant le BSID et les N SID avec une liste de SID stockée dans le nœud périphérique, et si la liste de SID stockée dans le nœud périphérique ne comprend pas la première liste de SID, la détermination, par le nœud périphérique, que le premier paquet échoue à la vérification, dans lequel la liste de SID stockée dans le nœud périphérique indique un chemin valide.

7. Procédé (200) selon la revendication 3, dans lequel le champ cible comprend les N SID dans la liste de SID du SRH, et la vérification, par le nœud périphérique, du premier paquet sur la base du BSID dans le premier paquet et d'un champ cible dans un en-tête de routage de segment, SRH, dans lequel N est un entier positif comprend :
la réalisation, par le nœud périphérique, d'une opération de hachage sur une première liste de SID comprenant le BSID et les N SID, pour obtenir une première valeur de hachage ; et
si une valeur de hachage stockée dans le nœud périphérique ne comprend pas la première valeur de hachage, la détermination, par le nœud périphérique, que le premier paquet échoue à la vérification, dans lequel la valeur de hachage stockée dans le nœud périphérique est obtenue en réalisant l'opération de hachage sur la liste de SID qui indique un chemin valide.

8. Procédé (200) selon la revendication 3, dans lequel le champ cible comprend le champ SL, la vérification, par le nœud périphérique, du premier paquet sur la base du BSID dans le premier paquet et d'un champ cible dans un en-tête de routage de segment, SRH, comprend :
la détermination, par le nœud périphérique, que le BSID est dans le domaine de confiance ; et
lorsqu'une valeur du champ cible n'est pas égale à 0, la détermination, par le nœud périphérique, que le premier paquet échoue à la vérification.

9. Procédé (200) selon l'une quelconque des revendications 1 à 8, dans lequel le procédé comprend également :
la réception, par le nœud périphérique, d'un second paquet, dans lequel le second paquet est un paquet SRv6, et une adresse de destination du second paquet est l'identifiant de segment de liaison BSID ;
la vérification, par le nœud périphérique, du second paquet sur la base du BSID dans le second paquet et d'un champ cible dans un SRH du second paquet ; et
le transfert, par le nœud périphérique, du second paquet qui passe la vérification.

10. Procédé (200) selon l'une quelconque des revendications 3 à 9 lorsqu'il dépend de la revendication 3, dans lequel la politique de protection de sécurité est portée dans l'une des formes suivantes :
un message de protocole de communication d'élément de calcul de chemin, PCEP ;
un message de protocole de passerelle frontière, BGP ;
un paquet de protocole de configuration de réseau, NETCONF ; ou
un paquet de protocole de gestion de réseau simple, SNMP.

11. Appareil de transfert de paquets, appliqué à un nœud périphérique dans un routage de segment sur un domaine de confiance de protocole Internet version 6, SRv6, et comprenant :
une unité de réception, configurée pour recevoir un premier paquet, dans lequel le premier paquet est un paquet SRv6, et une adresse de destination du premier paquet est un identifiant de segment de liaison, BSID ; et
une unité de traitement, configurée pour vérifier le premier paquet sur la base du BSID dans le premier paquet et d'un champ cible dans un en-tête de routage de segment, SRH, du premier paquet, dans lequel
l'unité de traitement est également configurée pour rejeter le premier paquet lorsque le premier paquet échoue à la vérification.

12. Appareil selon la revendication 11, dans lequel
l'unité de réception est également configurée pour recevoir une politique de protection de sécurité à partir d'un dispositif de gestion de commande, dans lequel la politique de protection de sécurité indique les nœuds périphériques pour vérifier le premier paquet sur la base du BSID et du champ cible dans le SRH.

13. Appareil selon la revendication 11 ou 12, dans lequel le champ cible comprend l'un ou plusieurs des éléments suivants :
un SID de saut suivant du BSID ;
N SID dans une liste d'identifiants de segment, SID, dans lequel le premier SID dans les N SID est le SID de saut suivant du BSID, et N est supérieur ou égal à 1 ; et
un champ de segment restant, SL.

14. Appareil selon la revendication 12, dans lequel la politique de protection de sécurité est portée dans l'une des formes suivantes :
un message de protocole de communication d'élément de calcul de chemin, PCEP ;
un message de protocole de passerelle frontière, BGP ;
un paquet de protocole de configuration de réseau, NETCONF ; ou
un paquet de protocole de gestion de réseau simple, SNMP.
